# EUROPÄISCHE PATENTSCHRIFT

(11) **EP 1 594 315 B1**
(45) Veröffentlichungstag und Bekanntmachung des Hinweises auf die Patenterteilung: **10.01.2007**
(21) Anmeldenummer: 04010682.5
(22) Anmeldetag: 05.05.2004
(51) Int. Cl.: H04N 5/77

(54) **Verfahren und Vorrichtung zum Synchronisieren von Videosignalen**
Method and apparatus for synchronising videosignals
Procédé et appareil pour synchroniser des signaux vidéo

(43) Veröffentlichungstag der Anmeldung: 09.11.2005
(73) Patentinhaber: MacroSystem Digital Video AG, 58300 Wetter (DE)
(72) Erfinder: Sprave, Hartmut, 61665 Alsbach-Hähnlein (DE); Sprave, Jörg, 58091 Hagen (DE)
(74) Vertreter: HOFFMANN EITLE

(56) Entgegenhaltungen:
- US-A1- 2003 021 591
- PATENT ABSTRACTS OF JAPAN Bd. 0102, Nr. 72 (E-437), 16. September 1986 (1986-09-16) -& JP 61 094461 A (SONY CORP), 13. Mai 1986 (1986-05-13)
- PATENT ABSTRACTS OF JAPAN Bd. 2002, Nr. 12, 12. Dezember 2002 (2002-12-12) -& JP 2002 223434 A (CANON INC), 9. August 2002 (2002-08-09)

## Beschreibung

Die vorliegende Erfindung betrifft ein Verfahren und eine Vorrichtung zum Synchronisieren von Videosignalen.

Videodreharbeiten erfolgen häufig nicht nur mit einer Kamera, sondern mit mehreren Kameras, um dasselbe Motiv gleichzeitig aus unterschiedlichen Blickwinkeln aufzeichnen. Um beispielsweise einen Dialog mehrerer Personen aufzuzeichnen, kann für jede Person eine separate Kamera mit Blickwinkel auf die jeweilige Person vorgesehen sein. Diese Konstellation ermöglicht bei durchlaufendem Ton, dass je nachdem, welche Person gerade spricht, lippensynchron zwischen den verschiedenen Kameraperspektiven hin- und hergewechselt wird. Der Ton wird üblicherweise von einer durchlaufenden Hauptkamera oder als separate durchlaufende Aufzeichnung aufgenommen, oder von den jeweiligen Kameras zusammen mit den jeweiligen Videobildern. Die aufgezeichneten Videosignale stellen dabei eine zeitliche Abfolge von Vollbildern oder Halbbildern dar, die in irgendeinem analogen oder digitalen Signalformat zeitlich hintereinander aufgenommen werden.

Wird von einer Kamera auf die nächste umgeschaltet, oder in das Bild einer laufenden Kamera das Bild einer anderen laufenden Kamera eingeblendet, muß sichergestellt werden, dass das eingeblendete Bild lippensynchron bleibt mit dem Ton, der beispielsweise von der anderen Kamera aufgenommen wird. Eine solche synchrone Verarbeitung der Signale der jeweiligen Kameras ist ohne weiteres dann erfüllt, wenn die Videosignale, die unmittelbar gemischt, überblendet, aneinandergefügt oder anderweitig miteinander kombiniert oder verarbeitet werden, laufende Lifeaufnahmen sind. Soweit jedoch bei diesem Videoschnitt keine Lifesignale, sondern von einem Speichermedium wiedergegebene Videosignale verwendet werden, ergibt sich die Notwendigkeit, festzüstellen, welche Bilder der jeweiligen Videokameras zeitlich zueinander gehören, also gleichzeitig oder zumindest nahezu gleichzeitig aufgenommen wurden. Will man beispielsweise einer durchlaufenden Aufnahme von einer Hauptkamera synchron laufende Einblendungen einer anderen Kamera hinzufügen, muss für diesen Vorgang Information darüber verfügbar sein, welche Bilder der jeweiligen Kameras zeitlich zueinander gehören und beim Videoschnitt als gleichzeitig aufgenommen behandelt werden müssen.

Eine aus US 2003/0021591 A bekannte Möglichkeit, diese Information bereitzustellen, besteht darin, allen Kameras ein und dasselbe Zeitsignal beispielsweise über Funk zur Verfügung zu stellen. Das Zeitsignal wird von jeder Kamera zusammen mit den jeweiligen Bildern aufgezeichnet, beispielsweise in Form eines Echtzeitcodes, der die Tageszeit bei der Aufnahme der Bilder jeweils in Stunden, Minuten, Sekunden und einer kleinsten Zeiteinheit entsprechend der Bilddauer (Kehrwert der Bildrate) eindeutig identifiziert. Dadurch weisen die Bilder der verschiedenen Kameras, die zur selben Zeit aufgenommen wurden, dieselbe zeitlich eindeutige Zeitinformation auf. Anhand dieses Zeitcodes lässt sich später feststellen, welche Bilder gleichzeitig aufgenommen wurden, und welche Bilder demgemäss beim Videoschnitt als gleichzeitig aufgenommen zu behandeln sind. Um allen Kameras dieselbe Zeitinformation für die Aufzeichnung zur Verfügung zu stellen, sind die jeweiligen Kameras permanent mit einem globalen Zeitsignalgenerator verbunden. Der dafür erforderliche technische Aufwand ist erheblich. Kameras mit extern synchronisierbarem Zeitcodeeingang über Draht oder Funk sind üblicherweise sehr teuer.

Andere bisher angewandte Methoden für die Synchronisierung von Kameras verwenden eine Filmklappe oder ein Blitzlicht zu Beginn einer jeden einzelnen Szene ("Take"), damit später anhand des Blitzes oder der Filmklappe festgestellt werden kann, welche Bilder der verschiedenen Kameras gleichzeitig aufgenommen wurden. Bei diesen Verfahren ist bei jeder Aufzeichnungsunterbrechung eine Neusynchronisierung, also eine neue Klappe oder ein neuer Blitz, erforderlich.

Aus US 3,858,967 ist ein Verfahren zur Synchronisation von Bild und Ton bekannt, worin Zeitinformation von jeweiligen Uhren, die als Zeitcodegeneratoren arbeiten, auf den Film und auf das Audioband geschrieben wird. Die Zeitcodegeneratoren werden vor der Aufnahme mittels einer Kalibrierungseinheit auf denselben Zeitcode eingestellt und anschließend während der Aufnahme freilaufend betrieben, wobei ausgenutzt wird, dass Quarzuhren, auch wenn sie frei, also voneinander unabhängig laufen, über einen längeren Zeitraum synchron bleiben. Allerdings setzt dieses Verfahren voraus, dass Zeitcodegeneratoren vorhanden sind, die zu einem gegebenen Moment mit ausreichender Präzision auf denselben Zeitcode einstellbar sind. Dies ist technisch relativ aufwendig.

Moderne DV-Kameras weisen üblicherweise eine Echtzeituhr auf. Die von dieser Uhr angezeigte Echtzeit wird zusammen mit jedem einzelnen von der Kamera aufgenommenen Bild aufgezeichnet, um dem Betrachter später zu ermöglichen, Datum und Aufnahmezeit in das wiedergegebene Video einzublenden. Welche Zeit die Echtzeituhr anzeigt, hängt allerdings davon ab, auf welche Zeit sie vom Benutzer zuvor gestellt wurde. Die Echtzeituhr ist freilaufend, also nicht mit einer anderen Uhr synchronisiert und zeigt die Uhrzeit üblicherweise auch nur in einer Auflösung von Sekunden als kleinste Zeiteinheit an, so dass alle im Verlauf einer Sekunde aufgenommenen Bilder dieselbe Aufnahmezeit anzeigen. Eine zeitliche Eindeutigkeit der Aufnahmezeit der Bilder ist also nicht gegeben. Solche Kameras zeichnen manchmal zusätzlich einen Code auf, der zwar Zeitcode genannt wird, jedoch keinen Rückschluß auf die Aufnahmezeit erlaubt, weil er lediglich die aufgezeichneten Bilder nach Stunden, Minuten, Sekunden und Vollbildern durchzählt.

Aufgabe der vorliegenden Erfindung ist es, eine Vorrichtung und ein Verfahren zum Synchronisieren von Videobildern anzugeben, womit ohne aufwendige Verteilung eines globalen Zeitsignals an mehrere Videokameras während der Aufnahme und ohne manuelle Interaktion mittels Filmklappe oder Blitz, mehrere mit verschiedenen Kameras aufgenommene, zeitlich zueinander gehörende Videobilder als gleichzeitig aufgenommen behandelt werden können, also beispielsweise Videobilder von einer ersten Kamera, die zusammen mit Ton aufgezeichnet wurden, ersetzt werden können durch mit dem Ton von der ersten Kamera lippensynchrone Videobilder von einer zweiten Kamera.

Diese Aufgabe wird erfindungsgemäß gelöst wie in den unabhängigen Patentansprüchen angegeben. Vorteilhafte Ausführungsbeispiele ergeben sich aus den abhängigen Ansprüchen.

Gemäß einem bevorzugten Ausführungsbeispiel der vorliegenden Erfindung weist eine erfindungsgemäße Vorrichtung Einrichtungen auf, um mehrere Videosignale, von denen jedes eine oder mehrere aufgenommene Szenen in Form einer Abfolge von Bildern darstellt, zu empfangen. Jedes der empfangenen Videosignale enthält Aufnahmezeitinformation darüber, welche Zeit eine jeweilige freilaufende Uhr anzeigte, als die Bilder aufgenommen wurden. Die jeweiligen freilaufenden Uhren sind beispielsweise Bestandteil jeweiliger für die Aufnahmen verwendeter Kameras, die die Videosignale erzeugen. Die Vorrichtung gemäß diesem Ausführungsbeispiel umfasst außerdem Einrichtungen, um die von den jeweiligen Uhren aktuell angezeigten Zeiten auszulesen, um also quasi einen Blick gleichzeitig oder hintereinander auf die jeweiligen laufenden Uhren zu werfen, und um anhand der so ausgelesenen Uhrzeiten einen jeweiligen Zeitversatz zu erfassen, der anzeigt, um wie viel die Uhren gegenüber den jeweiligen anderen Uhren vor-oder nachgehen. Schließlich weist die Vorrichtung Einrichtungen auf, um Bilder der verschiedenen Videosignale, deren jeweilige sich aus den Aufnahmezeitinformationen in den Videosignalen ergebende Aufnahmezeiten voneinander entsprechend dem erfassten Zeitversatz zwischen den jeweiligen Uhren abweichen, als gleichzeitig aufgenommen zu behandeln. Dabei kann es vorteilhaft sein, die Einrichtungen zum Erfassen des Zeitversatzes als handliches, tragbares Gerät auszubilden, das auch unabhängig von anderen Teilen der Synchronisationsvorrichtung betrieben werden kann, um eine Mitnahme an den Drehort und somit eine Erfassung des Zeitversatzes zwischen den Uhren zeitnah zu den Dreharbeiten zu erleichtern.

Die Uhren sind dabei freilaufend in dem Sinne, dass sie weder auf die gleiche Uhrzeit eingestellt zu sein brauchen, noch ein gemeinsames Zeitsignal zur Synchronisation der Uhren verwenden. Derartige freilaufende Uhren sind beispielsweise Bestandteil vieler auf dem Markt erhältlicher Videokameras und können beispielsweise mit der für die Videosignalerzeugung verwendeten Zeitbasis der Videokamera synchronisiert sein, ohne dass dies allerdings für die Erfindung erforderlich ist. Aufgrund von Quarztoleranzen der freilaufenden Uhren ist es unvermeidlich, dass die freilaufenden Uhren nicht exakt gleich schnell laufen. Mit anderen Worten weist der Zeitversatz zwischen den Uhren eine geringfügige Zeitabhängigkeit auf. Jedoch ist es ausreichend, den Zeitversatz zwischen den beteiligten Kameras einigermaßen zeitnah vor der Aufnahme der betreffenden Szenen, oder zwischen den Aufnahmen von Szenen oder einigermaßen zeitnah danach zu ermitteln, denn übliche Quarzuhren sind so ganggenau, dass sich der Zeitversatz selbst über Stunden hinweg allenfalls um wenige Bildperioden ändert.

Gemäß einem vorteilhaften Ausführungsbeispiel kann der Zeitversatz der beteiligten Kameras jedoch auch mehrmals hintereinander in zeitlichen Abständen erfasst werden, beispielsweise vor und nach der Aufnahme der betreffenden Szenen oder zu Beginn und am Ende eines Drehtages. Aus den mehrfachen Erfassungen und den zeitlichen Abständen zwischen den Erfassungen lässt sich dann der Verlauf des Zeitversatzes zwischen jeweiligen Kameras über der Zeit extrapolieren, so dass die Genauigkeit der Erfassung des Zeitversatzes erhöht werden kann.

Um den Zeitversatz zwischen den Uhren zu erfassen, kann die erfindungsgemäße Vorrichtung bevorzugt beispielsweise durch Benutzereingabe in einen Zeitversatzerfassungsmodus versetzt werden. In diesem Modus werden die jeweiligen Uhren gleichzeitig oder hintereinander für kurze Zeit an die Vorrichtung angeschlossen, beispielsweise durch Verbinden der Kamera, in welche die jeweilige Uhr eingebaut ist, mit der Vorrichtung. Die Vorrichtung enthält bevorzugt Einrichtungen, um automatisch die Verbindung der Kamera mit der Vorrichtung zu erkennen, und Einrichtungen, um bevorzugt automatisch mit der Kamera zu kommunizieren, um die von der Kamerauhr aktuell angezeigte Zeit auszulesen. Dieser Vorgang dauert bei Verwendung geeigneter Schnittstellen zwischen der Vorrichtung und der jeweiligen Kamera, beispielsweise einer IEEE 1394 oder USB Schnittstelle, nur einen kurzen Moment. Bevorzugt sind Speichereinrichtungen vorgesehen, um die von der Kamera übermittelte Zeitinformation und vorteilhaft auch Kameraidentifikationsinformation zu speichern. Die Identifikationsinformation der angeschlossenen Kamera ließt die Vorrichtung mittels darin vorgesehener Einrichtungen entweder aus der Kamera aus, falls von der Kamera diese Funktion unterstützt wird, oder die Vorrichtung empfängt eine entsprechende Eingabe des Benutzers.

Um den Zeitversatz zwischen den Uhren zu erfassen, kann die Vorrichtung so konstruiert sein, dass die von den jeweiligen Uhren aktuell angezeigten Zeiten beispielsweise im wesentlichen gleichzeitig ausgelesen und direkt miteinander verglichen werden. Dazu kann eine der Anzahl von gleichzeitig anzuschließenden Kameras entsprechende Anzahl von Schnittstellen vorgesehen sein. Alternativ kann in der Vorrichtung eine freilaufende Referenzuhr vorgesehen sein, um zu ermöglichen, dass die von den jeweiligen Uhren aktuell, also im Moment des Ablesens angezeigten Zeiten nacheinander gelesen werden, so dass eine einzige Schnittstelle für den Anschluß von mehreren Kameras eine nach der anderen, ausreichend sein kann. In diesem Fall wird zunächst eine Kamera an die Vorrichtung angeschlossen, die von der Kamerauhr aktuell angezeigte Zeit gelesen und mit der von der Referenzuhr gleichzeitig oder im wesentlichen gleichzeitig angezeigten Zeit verglichen. Danach wird eine nächste Kamera angeschlossen und die dann aktuell von deren Uhr angezeigte Zeit mit der dann aktuell angezeigten Referenzuhrzeit verglichen. Aus den auf diese Weise nacheinander erhaltenen Vergleichsergebnissen ergibt sich beispielsweise durch Differenzbildung der Zeitversatz zwischen den Uhren. Alternativ dazu kann auch die Referenzuhr auf die von der einen Uhr aktuell angezeigte Zeit gestellt werden und danach die von einer anderen Uhr angezeigte Zeit mit der Referenzuhrzeit verglichen werden, um den Zeitversatz zwischen der einen und der anderen Uhr zu erfassen.

Um eine Erfassung der Zeitversätze zwischen den jeweiligen Uhren zeitnah zu den Dreharbeiten zu erleichtern, kann es vorteilhaft sein, diejenigen Einrichtungen der erfindungsgemäßen Vorrichtung, die für die Zeitversatzerfassung vorgesehen sind, in einem separaten tragbaren, vorzugsweise batteriebetriebenen Modul vorzusehen, das sich für die Mitnahme an den Drehort eignet. Die übrigen Einrichtungen der Vorrichtung, mit denen die Bilder der verschiedenen Videosignale, deren jeweilige sich aus den Aufnahmezeitinformationen in den Videosignalen ergebende Aufnahmezeiten voneinander entsprechend dem erfassten Zeitversatz zwischen den jeweiligen Uhren abweichen, als gleichzeitig aufgenommen behandelt werden können, beispielsweise Einrichtungen für den Videoschnitt, können in einem zweiten Gerät vorgesehen sein, das nicht für die Mitnahme an den Drehort geeignet zu sein braucht. Das separate Zeitversatzerfassungsmodul kann in Entsprechung zu dem, was voranstehend zur Zeitversatzerfassung beschriebenen wurde, eine Schnittstelle und die Referenzzeituhr oder mehrere Schnittstellen aufweisen, um mit den jeweiligen Videokameras zu kommunizieren und die jeweiligen aktuellen Uhrzeiten der Kameras auszulesen. Das separate Zeiterfassungsmodul und das zweite Gerät weisen außerdem bevorzugt eine weitere Schnittstelle auf, über welche das Modul mit dem zweiten Gerät kommunizieren kann. Diese weitere Schnittstelle dient dazu, dem zweiten Gerät die von dem Zeitversatzerfassungsmodul ermittelten Zeitversätze zwischen den jeweiligen Kameras und die jeweiligen Kameraidentifikationsinformationen zu übermitteln, oder alternativ, dem zweiten Gerät kamerabezogene Informationen, z. B. die im Modul gespeicherten ausgelesenen Uhrzeiten der Kameras, die zugehörige Kameraidentifikationsinformation und die Uhrzeiten der Referenzzeituhr zu den jeweiligen Kamerauhren-Ausleseszeitpunkten, zu übermitteln, aus denen das zweite Gerät die Zeitversätze zwischen den jeweiligen Kameras selbst ermitteln kann. Bevorzugt ist das Zeitversatzermittlungsmodul als abnehmbare oder aus einem von außen zugänglichen Fach des zweiten Gerätes herausnehmbare Einheit ausgebildet. Bevorzugt ist das Zeiterfassungsmodul und das zweite Gerät derart konstruiert, dass die eine oder mehreren Schnittstellen des Zeitversatzerfassungsmoduls, wenn dieses in das zweite Gerät ein-bzw. daran angesetzt ist, von dem zweiten Gerät für den Empfang der Videosignale von den Kameras verwendet werden kann, und zwar bevorzugt über die zwischen den beiden Geräten vorgesehene weitere Schnittstelle.

Falls die jeweiligen empfangenen Videosignale Informationen über die aktuell von den jeweiligen Uhren angezeigten Uhrzeiten enthalten, kann der Zeitversatz zwischen den Uhren auch aus den empfangenen Videosignalen erfasst werden. Dies ist beispielsweise der Fall, wenn die empfangenen Videosignale nicht von einem Speichermedium, beispielsweise in der betreffenden Kamera, wiedergegeben werden, sondern Liveaufnahmen sind. In diesem Fall lassen sich die aktuell von den jeweiligen Uhren angezeigten Zeiten aus den in den jeweiligen, aktuell empfangenen Videosignalen enthaltenen Aufnahmezeitinformationen ablesen.

Gemäß einem bevorzugten Ausführungsbeispiel wird die zeitliche Auflösung bei der Erfassung des Zeitversatzes dadurch erhöht, dass die von einer jeweiligen Kamerauhr angezeigte Zeit daraufhin untersucht wird, wann ein Wechsel der Zeiteinheitenanzeige, etwa der Sekundenanzeige, auftritt. Aus der Erfassung des Zeitpunktes, wann die Zeiteinheitenanzeige weiterspringt, kann die von den Uhren angezeigte Zeit mit einer höheren Auflösung erfasst werden als die von den Uhren angezeigte Zeiteinheit. Beispielsweise wird die von der Uhr angezeigte Uhrzeit entsprechend dem Aufzeichnungsformat der Videosignale mit der Vollbildrate oder Halbbildrate der Videosignale oder häufiger wiederholt gelesen, um einen solchen Wechsel zu erfassen.

Bevorzugt wird in entsprechender Weise ein Wechsel der Zeiteinheitenanzeige in der Aufnahmezeitinformation in der Abfolge von Bildern eines Videosignals erfasst, und die für ein jeweiliges Bild in einem Videosignal enthaltene Aufnahmezeitinformation wird gemäß dem Zeitraum oder der Anzahl von Bildern zwischen dem Auftreten eines Wechsels und dem betreffenden Bild korrigiert, um die Auflösung der Aufnahmezeitinformation in den Videosignalen zu erhöhen. Auf diese Weise kann das erfindungsgemäße Verfahren und die erfindungsgemäße Vorrichtung auch mit preisgünstigen kommerziell erhältlichen Videokameras verwendet werden, die eine eingebaute Uhr aufweisen und die aufgezeichneten Bilder mit einer Aufnahmezeitinformation von relativ geringer zeitlicher Auflösung, beispielsweise von Sekunden, versehen.

Die Behandlung von Bildern der verschiedenen empfangenen Videosignale als gleichzeitig aufgenommen kann verschiedene Videoschnittvorgänge, Überblendungen, Einblendungen oder Ersetzungen von Bildern eines oder mehrerer der Videosignale in ein oder mehrere andere der Videosignale einschließen, wobei eines, mehrere oder alle empfangenen Videosignale verarbeitet werden können. Die Videosignale können dabei beispielsweise wiedergegebene Aufzeichnungen sein, die zuvor von jeweiligen Kameras auf ein Speichermedium, z.B. Videoband, optische Medien, Festplatte oder Halbleiterspeicher, aufgenommen wurden.

Die Behandlung von Bildern verschiedener Videosignale als gleichzeitig aufgenommen kann zusätzlich oder alternativ einschließen, die Aufnahmezeitinformation eines, mehrerer oder aller empfangenen Videosignale gemäß den jeweils erfassten Zeitversätzen zwischen den Uhren zu korrigieren oder zu überschreiben, um korrigierte Versionen der empfangenen Videosignale bereit zu stellen, worin zeitlich zueinander gehörende Bilder dieselbe Aufnahmezeitinformation aufweisen. Diese korrigierten Videosignale können dann beispielsweise in Videoschnittgeräten verarbeitet werden, die in herkömmlicher Weise vollsynchrone Zeitcodes in den Videosignalen der verschiedenen Kameras benötigen.

Bevorzugt werden die Videosignale in einem digitalen Videoformat empfangen, beispielsweise über eine IEEE 1394 Schnittstelle oder über eine USB Schnittstelle von einem Camcorder. Dieselbe Schnittstelle kann vorteilhaft auch dazu verwendet werden, die von den jeweiligen Uhren in den Kameras aktuell angezeigte Zeit auszulesen. Für die Darstellung der Aufnahmezeitinformation ist eine Vielzahl von Formaten geeignet, beispielsweise eine Darstellung als Tageszeit in Stunden, Minuten und Sekunden, irgendein bekanntes Echtzeitcodeformat ohne oder mit Bezug zur Tageszeit und mit oder ohne Vollbild- oder Halbbildzähler, oder irgendein anderes proprietäres Format. Entsprechendes gilt für das Format der von den freilaufenden Uhren angezeigten Zeit, wobei das Format der von den Uhren angezeigten Zeit identisch sein kann, aber nicht unbedingt identisch sein muss mit dem bei der Aufzeichnung verwendeten Aufnahmezeitformat.

Bevorzugt enthält zumindest eines der empfangenen Videosignale auch ein analoges oder bevorzugt digitales Tonsignal.

Eine gemäß der vorliegenden Erfindung arbeitende Vorrichtung zum Synchronisieren von Videosignalen kann als speziell für die Ausführung der erfindungsgemäßen Funktionen konstruierte elektronische Schaltung aufgebaut sein, mit Schaltungsteilen zum Empfangen und erfindungsgemäßen Verarbeiten der Videosignale von den Kameras, oder kann auf der Grundlage moderner digitaler Computertechnik aufgebaut sein, etwa als programmgesteuerte digitale Signalverarbeitungsvorrichtung oder als deren Bestandteil, oder kann durch geeignetes Programmieren eines Computers oder PCs oder einer als solches bekannten digitalen Videoschnittvorrichtung oder in irgendeiner anderen geeigneten Weise implementiert werden.

Im folgenden werden bevorzugte Ausführungsbeispiele der Erfindung, die lediglich der Erläuterung der Erfindung dienen, ohne die Erfindung auf die beschriebenen Ausführungsbeispiele einzuschränken, anhand der begleitenden Zeichnungen im einzelnen beschrieben. Dieselben oder einander entsprechende Elemente in den Zeichnungen sind zur Verdeutlichung der Beschreibung mit denselben Bezugszeichen versehen.
- Fig. 1a: zeigt eine Prinzipdarstellung einer Synchronisationsvorrichtung gemäß einem Ausführungsbeispiel der vorliegenden Erfindung;
- Fig. 1b: zeigt ein Flussdiagramm zur Erläuterung des Betriebs der in Fig. 1a dargestellten Vorrichtung;
- Fig. 2a: zeigt ein Blockschaltbild von in Fig. 1a gezeigten Komponenten in einem Zeitversatzerfassungsmodus;
- Fig. 2b: zeigt ein Blockschaltbild von in Fig. 1a gezeigten Komponenten während des Aufnahmebetriebs;
- Fig. 2c: zeigt ein Blockschaltbild von in Fig. 1a gezeigten Komponenten in einem Betriebsmodus zur Vorbereitung eines synchronisierten Videoschnittvorganges;
- Fig. 3: zeigt ein Flussdiagramm zur Erläuterung eines Ausführungsbeispiels eines synchronisierten Videoschnittvorganges;
- Fig. 4: zeigt ein Flussdiagramm zur Erläuterung eines Ausführungsbeispiels zur Erfassung von Zeitversätzen zwischen freilaufenden Kamerauhren;
- Fig. 5: zeigt ein Zeitdiagramm zur Erläuterung eines Ausführungsbeispiels für das Auslesen der aktuell von einer Kamerauhr angezeigten Zeit.

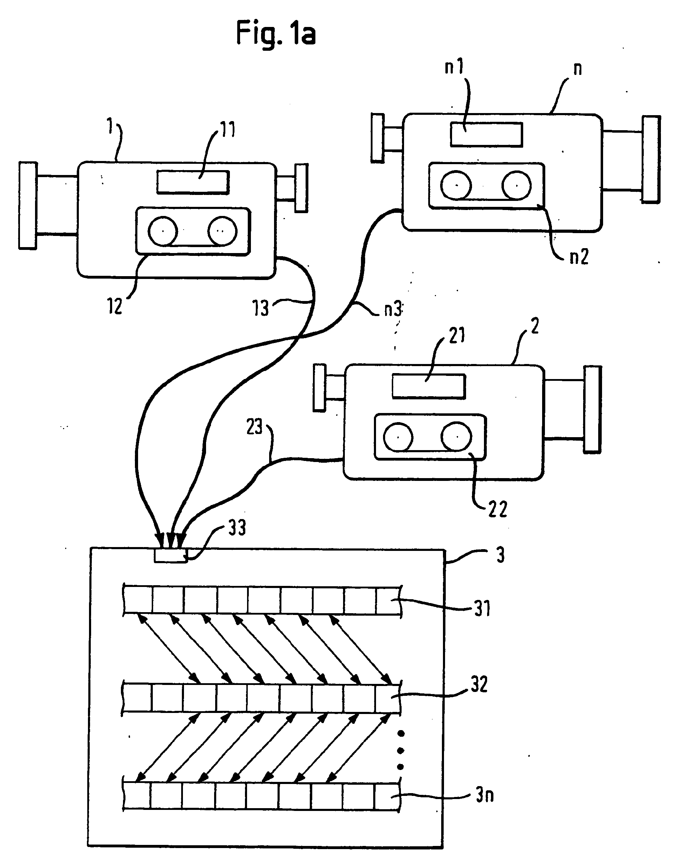

Figur 1a zeigt eine Prinzipdarstellung einer Synchronisationsvorrichtung gemäß einem Ausführungsbeispiel der vorliegenden Erfindung. In dieser Figur bezeichnen die Bezugsziffern 1, 2, ..., n mehrere Kameras, die dazu verwendet werden können, dieselbe Szene von verschiedenen Aufnahmewinkeln aufzuzeichnen. Die Kameras 1, 2, ..., n sind bevorzugt, aber nicht notwendig digitale Videokameras, beispielsweise ein sogenannter Camcorder, der neben den üblichen Bestandteilen eines Camcorders insbesondere eine batteriegepufferte freilaufende Echtzeituhr und ein Aufzeichnungsmedium, beispielsweise eine Mini-DV-Kassette, eine beschreibbare oder wiederbeschreibbare DVD oder auch einen Halbleiterspeicher aufweist. Dieses Aufzeichnungsmedium dient dazu, die von der jeweiligen Videokamera aufgenommenen Videosignale in einem geeigneten Signalformat zu speichern. Ein heutzutage weit verbreitetes digitales Aufzeichnungsformat ist das sogenannte DV Format, das sich zur Aufzeichnung auf Mini-DV-Kassetten eignet. In Figur 1a sind die jeweiligen freilaufenden Echtzeituhren der jeweiligen Kameras mit 11, 21, ..., n1 bezeichnet. Die Aufzeichnungsmedien sind mit den Bezugsziffern 12, 22, ..., n2 bezeichnet.

In der Figur bezeichnet die Bezugsziffer 3 eine Synchronisationsvorrichtung, die gemäß diesem Ausführungsbeispiel der vorliegenden Erfindung unter Steuerung durch einen geeignet programmierten Prozessor im folgenden näher beschriebene Abläufe und Funktionen durchführt. Dazu weist die Synchronisationsvorrichtung 3 einen Hauptprozessor auf, einen Arbeitsspeicher, Massenspeichereinrichtungen, beispielsweise eine Festplatte und Eingabeeinrichtungen wie Tastatur und Maus sowie Peripheriegeräte, z. B. einen Graphikprozessor, um einen oder mehrere Monitore anzusteuern. Alle diese Komponenten und ihre Verschaltung als Computer sind herkömmlich und als solche dem Fachmann hinlänglich bekannt, wobei eine Vielzahl verschiedener bekannter Computerarchitekturen als Plattform für eine Synchronisationsvorrichtung gemäß diesem Ausführungsbeispiel geeignet sind. Die Synchronisationsvorrichtung weist zumindest eine Schnittstelle 33 auf, beispielsweise eine Schnittstelle nach IEEE 1394, auch Firewire genannt, und/oder eine USB Schnittstelle, die ebenfalls als solche hinlänglich bekannt und verbreitet sind. Diese Schnittstelle 33 ermöglicht den Anschluss der Kameras 1, 2, ..., n an die Synchronisationsvorrichtung 3 über jeweilige Datenleitungen 13, 23, ..., n3. Über diese Leitungen kann die Synchronisationsvorrichtung 3 einerseits erfassen, welchen Zeitversatz die jeweiligen Uhren 11, 21, ..., n1 der Kameras 1, 2, ..., n zueinander aufweisen. Außerdem wird in diesem Ausführungsbeispiel über die Leitungen 13, 23, ..., n3 der Inhalt der jeweiligen Speichermedien 12, 22, ..., n2 der jeweiligen Kameras in Form von Videosignalen an die Synchronisationsvorrichtung 3 übertragen, die die Videosignale 31, 32, ..., 3n auf einem geeigneten Medium, beispielsweise auf einer Festplatte, speichert. 31 bezeichnet das in der Synchronisationsvorrichtung 3 gespeicherte Videosignal, das von der Kamera 1 stammt, 32 das gespeicherte Videosignal von der Kamera 2, und 3n das Videosignal von der Kamera n.

Die empfangenen und von der Synchronisationsvorrichtung 3 gespeicherten Videosignale 31, 32, ..., 3n sind jeweils schematisch als Abfolge von Bildern dargestellt. Die Doppelpfeile in Figur 1a zwischen Bildern jeweiliger Videosignale 31, 32, ..., 3n stellen schematisch dar, welches jeweilige Bild beispielsweise des Videosignals 31 mit welchem Bild beispielsweise des Videosignals 32 zeitlich zusammengehört, welche Bilder von den jeweiligen Kameras also im wesentlichen gleichzeitig aufgenommen wurden.

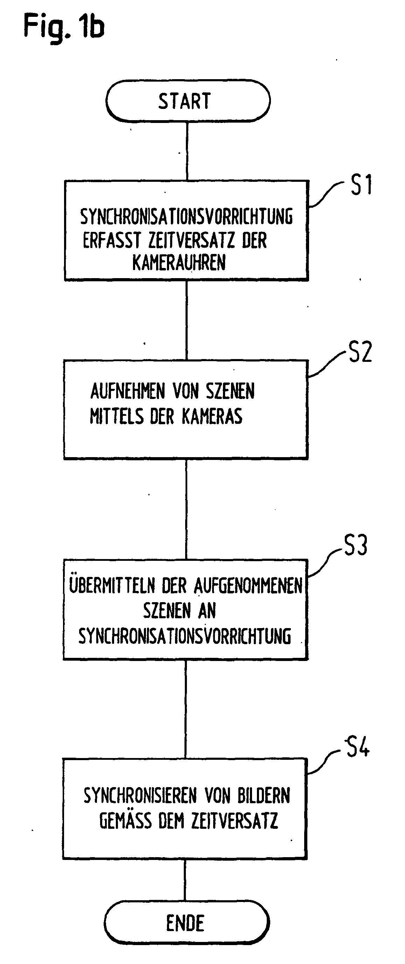

Diese durch die Doppelpfeile in Figur 1a angedeutete zeitliche Zusammengehörigkeit jeweiliger Bilder in den von der Synchronisationsvorrichtung 3 von den Kameras empfangenen und gespeicherten Videosignale ermittelt die Synchronisationsvorrichtung 3 anhand von Aufnahmezeitinformation, die in den jeweiligen Videosignalen 31, 32, ..., 3n enthalten ist und angibt, welche Uhrzeit die freilaufende Uhr der jeweiligen für die Aufnahme verwendeten Kamera anzeigte, als das betreffende Bild aufgenommen wurde. Außerdem verwendet die Synchronisationsvorrichtung 3 für die Ermittlung der zeitlich zusammengehörenden Bilder der verschiedenen Videosignale 31, 32, ..., 3n den erfassten Zeitversatz zwischen den jeweiligen freilaufenden Uhren der bei den Aufnahmen der verschiedenen Videosignale verwendeten Kameras. Dies wird im folgenden unter Bezugnahme auf Figur 1b detaillierter beschrieben.

Fig. 1b zeigt ein Flussdiagramm zur Erläuterung des Betriebs der in Figur 1a dargestellten Synchronisationsvorrichtung. Wie in Figur 1b dargestellt, erfasst die Synchronisationsvorrichtung 3 in einem Schritt S1 den Zeitversatz zwischen den jeweiligen freilaufenden Kamerauhren der Kameras, die für gleichzeitige Aufnahmen derselben Szene aus verschiedenen Blinkwinkeln verwendet werden sollen. In diesem Schritt S1 liest die Synchronisationsvorrichtung 3 die aktuell von den freilaufenden Uhren 11, 21, ..., n1 angezeigten Uhrzeiten, um zu erfassen, um wie viel die jeweiligen Uhren relativ zueinander vor- oder nachgehen. Für diesen Vorgang der Zeitversatzerfassung werden die Kameras 1, 2, ..., n entweder gleichzeitig über eine entsprechende Anzahl von Buchsen der Schnittstelle 33 mit der Synchronisationsvorrichtung verbunden, um die von den jeweiligen Uhren aktuell angezeigten Uhrzeiten im wesentlichen gleichzeitig auszulesen und miteinander zu vergleichen, oder die Kameras 1, 2, ..., n werden der Reihe nach mit der Synchronisationsvorrichtung 3 über die Schnittstelle 33 verbunden, um den Zeitversatz zwischen den freilaufenden Uhren 11, 21, ..., n1 zu erfassen. Bei dieser letztgenannten Ausführungsform umfasst die Synchronisationsvorrichtung 3 eine Referenzzeituhr, deren aktuell angezeigte Zeit mit der jeweils angeschlossenen Kamerauhr verglichen wird, um aus den erfassten Zeitversätzen zwischen der jeweiligen Kamera und der Referenzzeituhr den jeweiligen Zeitversatz zwischen den Kamerauhren zu erhalten. Diese Ausführungsform ist darin vorteilhaft, dass die Anzahl der in die Zeitversatzerfassung einbeziehbaren Kameras nicht durch die Anzahl von an der Schnittstelle vorgesehenen Buchsen beschränkt ist.

Nachdem im Schritt S1 der Zeitversatz zwischen den freilaufenden Uhren in den verschiedenen Kameras erfasst worden ist, schließt sich nun der Schritt S2 an, worin die eigentliche Aufnahme der Szenen gleichzeitig mittels der verschiedenen Kameras stattfindet. Dabei ist es nicht erforderlich, dass sämtliche Kameras synchron an- und ausgeschaltet werden. Der Schritt S2 des Aufnehmens der Szenen mittels der verschiedenen Kameras kann derart vonstatten gehen, dass mehrere Kameraleute völlig frei ihre jeweilige Kamera bedienen und völlig unabhängig von anderen Kameras entscheiden können, wann sie Aufnahmen von Szenen beginnen und beenden. Sobald ein Kameramann die Aufnahmestarttaste an seiner Kamera betätigt, zeichnet die Kamera eine Abfolge von Bildern der Szene in Form eines Videosignals auf ihr Aufzeichnungsmedium auf, welches Videosignal beispielsweise für jedes einzelne aufgezeichnete Bild oder für Gruppen von Bildern Aufnahmezeitinformation enthält, die angibt, welche Zeit die freilaufende Uhr der Kamera in dem Moment anzeigte, als ein jeweilige Bild aufgezeichnet wurde. Diese Funktion wird von den meisten kommerziell erhältlichen Camcordern üblicherweise zu dem Zweck unterstützt, daß der Benutzer später bei der Wiedergabe seiner Aufnahmen feststellen kann, wann diese Aufnahmen aufgezeichnet wurden. Natürlich ist die Aufnahmezeitinformation, die bei vielen Kameras das Datum und die Uhrzeit nach Stunden, Minuten und Sekunden darstellt, abhängig davon, wie genau der Benutzer die in der Kamera vorgesehene, freilaufende Uhr gestellt hat. Es besteht keine Notwendigkeit, dass alle Kamerauhren präzise dieselbe Zeit anzeigen.

Nachdem im Schritt S2 Szenen mit mehreren Kameras aufgenommen wurden, werden in einem anschließenden Schritt S3 die in den Kameras aufgezeichneten Videosignale an die Synchronisationsvorrichtung 3 übermittelt. Zu diesem Zweck werden die jeweiligen Kameras wieder über die Schnittstelle 33 an die Vorrichtung 3 angeschlossen, um den Überspielvorgang durchzuführen. Auch hier besteht die Möglichkeit, die Synchronisationsvorrichtung 3 entweder so auszugestalten, dass mehrere Schnittstellen vorgesehen sind, um die gespeicherten Aufnahmen von mehreren Kameras parallel in die Speichereinrichtung in der Synchronisationsvorrichtung 3 zu überspielen, oder die Kameras werden der Reihe nach an die Schnittstelle 33 angeschlossen, um den Überspielvorgang durchzuführen.

Nachdem die gewünschten Szenen in Form der Videosignale 31, 32, ..., 3n aus den Kameras 1, 2, ..., n in die Synchronisationsvorrichtung 3 überspielt worden sind, wird anschließend in einem Schritt S4 der eigentliche Synchronisationsvorgang durchgeführt, also eine wie auch immer geartete Behandlung derjenigen Bilder in den verschiedenen Videosignalen 31, 32, ..., 3n als gleichzeitig aufgenommen, die tatsächlich von den verschiedenen Kameras in demselben Moment aufgenommen wurden. Weil die jeweiligen Kameras freilaufend betrieben werden, ist natürlich das Zeitraster der eigentlichen Aufnahmemomente, wenn sich der elektronische oder mechanische Verschluss öffnet, bei den verschiedenen Kameras nicht perfekt aufeinander ausgerichtet und gleichzeitig. Jedoch ist die maximale zeitliche Verschiebung zwischen den Aufnahmezeitrastern der verschiedenen Kameras niemals größer als die Hälfte der Zeit zwischen zwei aufeinander folgenden Öffnungen des Verschlusses einer Kamera. Diese Zeit beträgt beispielsweise bei einer Kamera, die ein Pal-Signal nach dem Zeilensprungverfahren aufzeichnet, 20 msec, entsprechend einer Halbbildrate von 50/s. Aufnahmezeiten von Bildern mit verschiedenen Kameras, die sich in dieser Größenordnung voneinander unterscheiden, können jedoch ohne weiteres als gleichzeitig aufgenommen angesehen werden, denn geringe Abweichungen zwischen den Aufnahmezeitpunkten von zwei als gleichzeitig aufgenommen behandelten Bildern von verschiedenen Kameras kann der Betrachter nicht wahrnehmen.

Der Vorgang des Synchronisierens von Bildern im Schritt S4 wird anhand der Zeitversätze zwischen den freilaufenden Uhren in denjenigen Kameras durchgeführt, die bei der Aufnahme der Bilder verwendet wurden. Diese Zeitversätze sind der Synchronisationsvorrichtung 3 aus dem vorangehenden Schritt S1 bekannt. Im Schritt S4 behandelt die Synchronisationsvorrichtung solche Bilder der verschiedenen Videosignale 31, 32, ..., 3n als gleichzeitig aufgenommen, deren jeweilige Aufnahmezeiten im wesentlichen den Zeitversatz aufweisen, den auch die Uhren der für die Aufnahme der Bilder verwendeten Kameras aufweisen. Bilder, deren jeweilige Aufnahmezeiten diese Bedingung erfüllen, behandelt die Synchronisationsvorrichtung 3 als gleichzeitig aufgenommen, wobei beispielsweise Schnitte, Einblendungen oder Überblendungen zwischen den verschiedenen Videosignalen 31, 32, ..., n lippensynchron und ohne Zeitsprünge im resultierenden Videosignal vorgenommen werden, oder der Ton eines Videosignals lippensynchron mit dem Bild eines anderen Videosignals kombiniert wird. Die Behandlung der zeitlich zueinander gehörenden Bilder der Videosignale von den verschiedenen Kameras als gleichzeitig aufgenommen, kann eine Vielzahl von kreativen Vorgängen einschließen, die an einem, mehreren oder allen zu synchronisierenden Videosignalen durchgeführt werden können, je nachdem, welche Möglichkeiten die für die Verarbeitung der jeweiligen Videosignale verwendete Videoschnitteinrichtung bereitstellt.

Obwohl in Figur 1b der Schritt S1 der Zeitversatzerfassung zwischen den jeweiligen Kamerauhren als dem Schritt S2 der Aufnahme von Szenen mittels der Kamera vorangehend dargestellt wurde, kann der Schritt S1 zu einem beliebigen Zeitpunkt vor dem Schritt S4 durchgeführt werden, beispielsweise im Anschluss an den Schritt S2 oder auch erst im Anschluss an den Schritt S3, oder auch innerhalb des Schrittes S2, beispielsweise zwischen den Aufnahmen von aufeinander folgenden Szenen, oder sogar während der Aufnahme einer Szene, wenn die Kamera im Aufnahmemodus ein Auslesen der von ihrer Uhr aktuell angezeigten Zeit erlaubt. Ebenso ist es möglich, dass die jeweiligen Kameras zu verschiedenen Zeitpunkten der in Figur 1b gezeigten Abfolge mit der Synchronisationsvorrichtung 3 verbunden werden, um die aktuelle, von der jeweiligen Kamerauhr angezeigte Uhrzeit auszulesen. Beispielsweise kann die Uhr einer ersten Kamera vor dem Schritt 2 ausgelesen werden, während die Uhr einer zweiten Kamera danach ausgelesen wird, und die dritte Kamerauhr erst nach dem Schritt S3 gelesen wird. Beliebige zeitliche Abläufe sind hier möglich, solange die Bedingung erfüllt ist, dass der Synchronisationsvorrichtung 3 spätestens bei der Durchführung des Synchronisationsvorganges in Schritt S4 die Zeitversätze zwischen den jeweiligen Kameras bekannt sind.

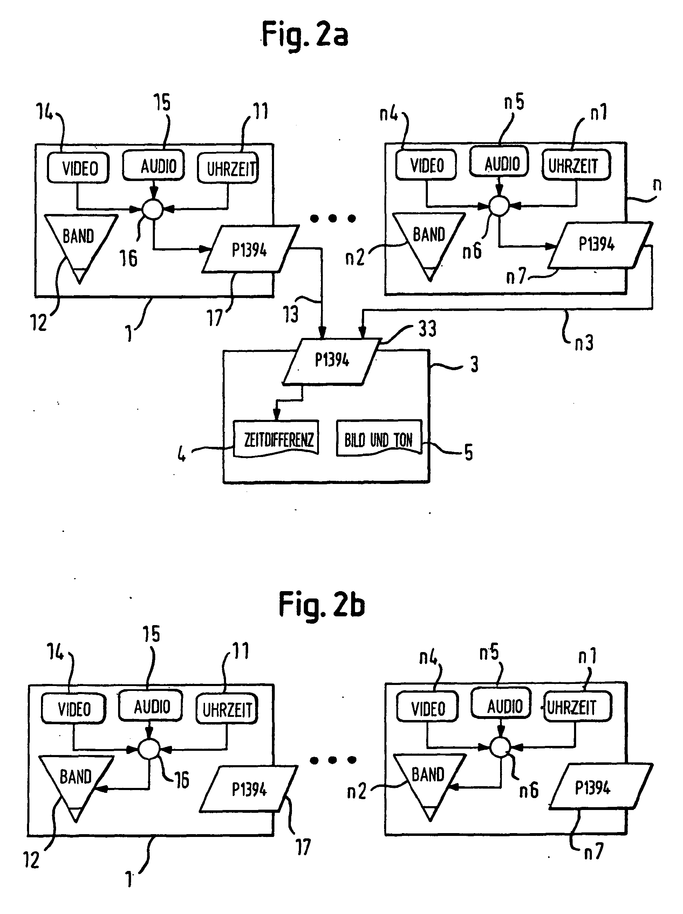

Figur 2a zeigt ein Blockschaltbild der in Figur 1a gezeigten Geräte, wenn diese im Zeitversatzerfassungsmodus betrieben werden. In Figur 2a werden für die in Figur 1a bereits beschriebenen Elemente dieselben Bezugsziffern verwendet. Auf diese Beschreibung wird Bezug genommen, um Wiederholungen zu vermeiden. Bezugsziffer 12 bezeichnet ein Speichermedium in der Kamera 1. In entsprechender Weise bezeichnet n2 ein Speichermedium in der Kamera n. 14 bezeichnet den Videoschaltungsteil der Kamera 1, 15 den Audioschaltungsteil der Kamera 1, und 11 bezeichnet die bereits beschriebene freilaufende Echtzeituhr der Kamera 1. Die Bezugsziffern n4, n5 und n1 bezeichnen die entsprechenden Komponenten der Kamera n. 16 bezeichnet denjenigen Schaltungsteil in der Kamera 1, der aus den Bildsignalen vom Videoteil 11, den Tonsignalen vom Audioteil 15 und der von der Echtzeituhr 11 angezeigten Zeit ein Videosignal erzeugt, das die Bild-, Ton und Aufnahmezeitinformation enthält. Dieses Videosignal wird über eine Schnittstelle 17, beispielsweise eine Firewire-Schnittstelle nach IEEE 1394 aus der Kamera herausgeführt. Die Bezugszeichen n6 und n7 bezeichnen entsprechende für die Kamera n. Diese dargestellten Komponenten sind üblich für kommerziell erhältliche Videokameras, beispielsweise einen sogenannten DV Camcorder mit einer Firewire-Schnittstelle, so dass eine detailliertere Beschreibung dieser Teile nicht erforderlich ist.

In dem in Figur 2a erzeigten Zeiterfassungsmodus entsprechend dem Schritt S1 in Figur 1b werden die jeweiligen Kameras 1, ..., n in einem Modus betrieben, in dem die von der Echtzeituhr 11 bzw. n1 aktuell angezeigte Uhrzeit über die Schnittstelle 17 bzw. n7 von außerhalb der Kamera gelesen werden kann. Dies ist üblicherweise dann der Fall, wenn die Kamera auf Aufnahme geschaltet wird, wobei es nicht erforderlich ist, dass tatsächlich eine Aufzeichnung auf das Speichermedium 12 bzw. n2 stattfindet oder ein Speichermedium in die Kamera eingelegt ist. Dieser Betriebsmodus ist in Figur 2a schematisch mittels des Pfeils von der Videosignalerzeugungseinrichtung 16 bzw. n6 zur Schnittstelle 17 bzw. n7 dargestellt. Obwohl in diesem Modus handelsübliche Kameras auch die Video- und Audioinformation in dem Videosignal über die Leitung 13 bzw. n3 übertragen, wird diese Information für die Erfassung des Zeitversatzes zwischen den Kamerauhren nicht benötigt.

Die in diesem Modus von den Kameras 1 bzw. n über ihre jeweiligen Schnittstellen 17 bzw. n7 bereitgestellten Signale werden über die Datenleitungen 13 bzw. n3 und die Schnittstelle 33 der Synchronisationsvorrichtung 3 an eine darin vorgesehene Einrichtung 4 übermittelt, welche aus den darin enthaltenen Informationen über die aktuell von den jeweiligen Uhren 11 bzw. n1 angezeigten Uhrzeiten den Zeitversatz zwischen diesen Uhren ermittelt. Die Zeitversatzerfassungseinrichtung 4 umfasst bevorzugt eine freilaufende Referenzzeituhr, die beispielsweise die Systemzeituhr der Synchronisationsvorrichtung 3 sein kann, um zu ermöglichen, dass die jeweiligen Kameras 1, ..., n hintereinander an die Vorrichtung 3 angeschlossen werden können, um den Zeitversatz zwischen jeweiligen Kameras zu ermitteln. Dazu vergleicht die Einrichtung 4 die von einer momentan angeschlossenen Kamera übermittelte aktuell angezeigte Uhrzeit mit der von ihrer Referenzzeituhr aktuell angezeigten Uhrzeit und speichert diese Differenz zur Referenzzeit. Dieser Vorgang wird für alle in die Zeitversatzerfassung einzubeziehenden Kameras wiederholt. Die Einrichtung 4 ermittelt dann den Zeitversatz zwischen zwei Kameras aus den Differenzen zur Referenzzeit, die für die beiden betreffenden Kameras ermittelt wurden. Das Bezugszeichen 5 bezeichnet eine Bild- und Tonverarbeitungseinheit, deren Funktionsweise weiter unten detailliert erläutert wird.

Figur 2b zeigt ein Blockschaltbild der in Figur 1a gezeigten Kameras während des Aufnahmebetriebs. Die in Figur 2b gezeigten Bezugszeichen entsprechen denen in Figur 2a. Die in Figur 2b gezeigten Kameras 1, ..., n zeichnen während des Aufnahmebetriebs völlig unabhängig voneinander die von den jeweiligen Videosignalerzeugungsschaltungen 16, ..., n6 erzeugten Videosignale, die die Bildinformation, Audioinformation und die während der Aufnahme aktuell von den jeweiligen Echtzeituhren 11, ..., n1 angezeigten Uhrzeiten enthalten, auf die jeweiligen Speichermedien 12, ..., n2 der jeweiligen Kameras 1, ..., n auf. Dieser Vorgang ist in Figur 2b durch die Pfeile schematisch dargestellt, die von den jeweiligen Videosignalerzeugungsschaltungen 16, ..., n6 auf die jeweiligen Speichermedien 12, ..., n2 zeigen. Der in Figur 2b schematisch dargestellte Aufnahmebetrieb der jeweiligen Kameras 1, ..., n ist herkömmlicher Art, so dass eine detaillierte Beschreibung des Aufzeichnungsvorganges nicht erforderlich ist.

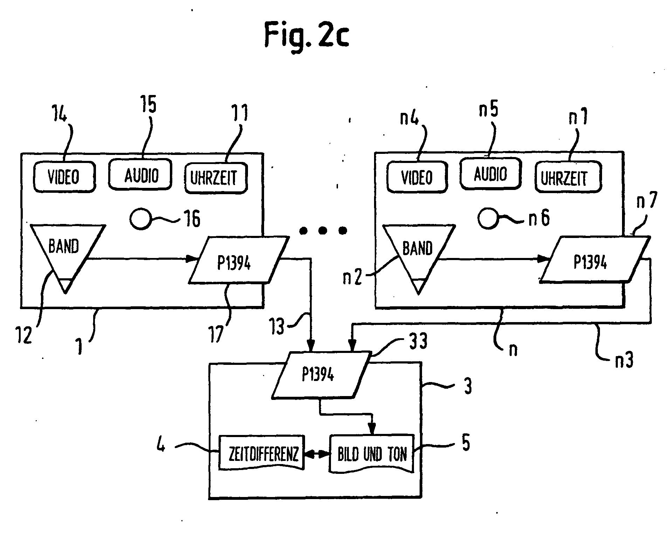

Figur 2c zeigt ein Blockschaltbild der in Figur 1a gezeigten Komponenten in einem Modus zur Vorbereitung oder Durchführung eines synchronisierten Videoschnittvorganges. Auch in Figur 2c sind die Komponenten, die bereits in den vorangehenden Figuren beschrieben wurden, mit denselben Bezugsziffern bezeichnet, um Wiederholungen bei der Beschreibung derselben zu vermeiden.

In dem in Figur 2c gezeigten Betriebsmodus werden die Kameras 1, ..., n entweder der Reihe nach oder parallel in einem herkömmlichen Wiedergabemodus betrieben, um die auf den jeweiligen Speichermedien 12, ..., n2 der Kameras 1, ..., n in dem vorangehenden Aufnahmebetrieb aufgezeichneten Videosignale wiederzugeben und über die jeweiligen Schnittstellen 17, ..., n7 der Kameras und die Schnittstelle 33 in die Synchronisationsvorrichtung 3 zu übertragen. Bei diesem Übertragungsvorgang werden die Informationen aus den jeweiligen Speichermedien der Kameras in ein nicht gezeigtes Speichermedium der Synchronisationsvorrichtung 3, beispielsweise eine Festplatte ausreichender Kapazität, kopiert, so dass in der Synchronisationsvorrichtung 3 nach Abschluss dieses Übertragungsvorganges die in Figur 1a mit den Bezugszeichen 31, 32, ..., 3n bezeichneten Videosignale zur Verfügung stehen. Für jedes dieser Videosignale wird außerdem Kameraidentifikationsinformation hinterlegt, die angibt, von welcher der Kameras das jeweilige Videosignal stammt. Die mit dem Bezugszeichen 5 bezeichnete Einrichtung in der Synchronisationsvorrichtung 3 verarbeitet die aus den Speichermedien der jeweiligen Kameras 1, ...., n empfangenen Videosignale anhand der in der Einrichtung 4 im vorangehenden Schritt gespeicherten Zeitversatzinformation auf der Grundlage der in den jeweiligen gespeicherten Videosignalen enthaltenen Aufnahmezeitinformation. In dem in Figur 2c gezeigten Ausführungsbeispiel ermittelt die Einrichtung 5 für ein erstes der gespeicherten Videosignale 31, 32, ..., n die Aufnahmezeitinformation eines darin enthaltenen Bildes. Um dieses erste Videosignal mit einem zweiten der gespeicherten Videosignale 31, 32, ..., 3n zu synchronisieren, ermittelt die Einrichtung 5 als nächstes den Zeitversatz zwischen den beiden Kameras, die die beiden zu synchronisierenden Videosignale aufgezeichnet haben, gemäß der in der Einrichtung 4 für die jeweiligen Kameras gespeicherten Zeitversatzinformation. Die Aufnahmezeit eines Bildes des einen Videosignals wird um den Zeitversatz zwischen den Kameras korrigiert, und dasjenige Bild des anderen Videosignals gesucht, dessen Aufnahmezeit von der um den Zeitversatz zwischen den Kameras korrigierten Aufnahmezeit des ersten Bildes am wenigsten abweicht. Sobald diese beiden Bilder der beiden zu synchronisierenden Videosignale gefunden sind, ist es beispielsweise möglich, diese beiden Signale nebeneinander etwa auf demselben Monitor so wiederzugeben, dass ursprünglich gleichzeitige Ereignisse in den beiden Aufnahmen gleichzeitig ablaufend wiedergegeben werden. Damit sind diese beiden Videosignale synchronisiert und können auf beliebige Weise synchron nachbearbeitet werden. Beispielsweise kann die Nachbearbeitung unter Verwendung verschiedenster Videoschnittfunktionen erfolgen. Beispielsweise kann alternativ oder zusätzlich eine Funktion vorgesehen sein, den synchronisierten Videosignalen einen synchronen Zeitcode hinzuzufügen, der deren Verarbeitung in einer herkömmlichen Schnittvorrichtung ermöglicht, die für die ordnungsgemäße Funktion vollsynchron aufgenommene Zeitcodes in den verschiedenen Videosignalen erwartet.

Natürlich ergeben sich verschiedene Möglichkeiten, wie die Synchronisation der Bilder verschiedener Videosignale anhand des Zeitversatzes zwischen den Kameras und den in den Videosignalen enthaltenen Aufnahmezeitinformationen implementiert werden kann. Dabei kann vorteilhaft Gebrauch gemacht werden von der Tatsache, dass die Bildraten der Kameras, also die Anzahl der aufgenommenen Bilder pro Sekunde, nur unwesentlich voneinander abweichen, denn die Kameras sind üblicherweise quarzgesteuert. Deshalb ist es nicht erforderlich, dass die Einrichtung 5 der Synchronisationsvorrichtung 3 für jedes einzelne Bild erneut einen Synchronisationsvorgang durchführt. Vielmehr kann es ausreichend sein, dass die Einrichtung 5 für ein Bild des einen Videosignals das zeitlich dazugehörende Bild des anderen Videosignals findet und ausgehend von diesen Bildern einen gemeinsamen Bildzähler verwendet, um die zeitlich zueinander gehörenden Bilder der beiden Videosignale zu adressieren. Alternativ dazu kann die Einrichtung 5 natürlich auch für jedes einzelne Bild des einen Videosignals anhand der Aufnahmezeitinformationen in den beiden Videosignalen und dem Zeitversatz zwischen den beiden Kameras das zeitlich dazugehörige Bild des anderen Videosignals ermitteln. Falls es für ein Bild des einen Videosignals kein zeitlich dazugehöriges Bild des anderen Videosignals gibt, weil die andere Kamera zu diesem Zeitpunkt nichts aufgezeichnet hat, kann die Einrichtung 5 beispielsweise ein Schwarzbild oder ein vorgespeichertes Bild mit einer diesbezüglichen Mitteilung, oder mit einem Symbol oder ähnliches einblenden. Hier ergibt sich eine Vielzahl von Gestaltungsmöglichkeiten, die sich dem Fachmann aus der jeweilig gewünschten Anwendung unmittelbar erschließen.

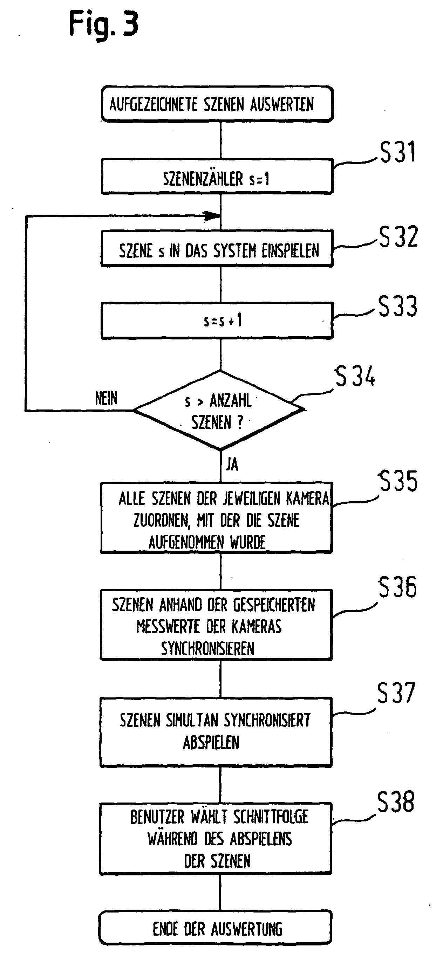

Figur 3 zeigt ein Flussdiagramm zur Erläuterung eines Ausführungsbeispiels eines synchronisierten Videoschnittvorgangs. Zunächst wird in Schritt S31 ein Szenenzähler initialisiert. In den anschließenden Schritten S32, S33 und S34 werden von den jeweiligen Kameras 1, ..., n eine Vielzahl von Szenen in die Speichereinrichtung der Synchronisationsvorrichtung 3 überspielt, und für jede Szene wird in Schritt S33 ein Szenenindexzähler erhöht, der die jeweilige Szene identifiziert. Die Szenenerkennung kann dabei auch in an sich bekannter Weise automatisch erfolgen, beispielsweise anhand von Zeitsprüngen in der Aufnahmezeitinformation, die in dem überspielten Videosignal von einer jeweiligen Kamera enthalten ist. Sind sämtliche Szenen, die für den Videoschnittvorgang verwendet werden sollen, in Schritt S34 überspielt worden, werden in Schritt S35 die überspielten Szenen der jeweiligen Kamera zugeordnet, mit der die Szene aufgenommen wurde. In diesem Schritt wird zu jedem Szenenindex beispielsweise die Kameraidentifikationsinformation der für die Aufnahme der Szene verwendeten Kamera in der Speichereinrichtung der Synchronisationsvorrichtung 3 hinterlegt. Dieser Vorgang kann manuell erfolgen, beispielsweise durch Markieren der betreffenden Szene auf dem Monitor und Eingabe der dazugehörenden Kameraidentifikationsinformation, oder automatisch, was allerdings voraussetzt, dass das von der Videokamera in die Synchronisationsvorrichtung 3 überspielte Videosignal die Kameraidentifikationsinformation, beispielsweise die Seriennummer der Kamera, enthält.

In Schritt S36 werden die Szenen dann anhand der zuvor ermittelten Zeitversätze zwischen den beteiligten Kameras synchronisiert, wie bereits beschrieben wurde. Als Ergebnis der Synchronisation der verschiedenen Szenen ist es nun in Schritt S37 möglich, diese Szenen gleichzeitig synchronisiert abzuspielen, so dass diejenigen Ereignisse in den verschiedenen Szenen, die ursprünglich gleichzeitig stattfanden, in den abgespielten Szenen auch gleichzeitig auftreten. Bei diesem Abspielvorgang werden bevorzugt sämtliche synchronisierten Szenen auf einer einheitlichen Zeitlinie angeordnet, auf der der Bediener der Synchronisationsvorrichtung 3 beispielsweise mittels eines Cursors hin- und herfahren kann, wie als solches von herkömmlichen Videoschnittgeräten bekannt, um mittels des Cursors zu bestimmen, welcher Teil der auf der Zeitlinie synchron zueinander ausgerichteten Szenen angezeigt werden soll. In Schritt S38 wählt der Benutzer dann beispielsweise während des Abspielens der Szenen eine Schnittfolge aus, wobei der Ton einer der Kameras beliebig mit Bildern von den anderen Kameras kombiniert werden kann, ohne dass die Lippensynchronität zwischen Bild und Ton verloren geht. Diese Videoschnittfunktionen sind in diesem Ausführungsbeispiel programmgesteuert auf derselben Hardwareplattform implementiert, welche auch den oben beschriebenen Synchronisationsvorgang unter Programmsteuerung durchführt.

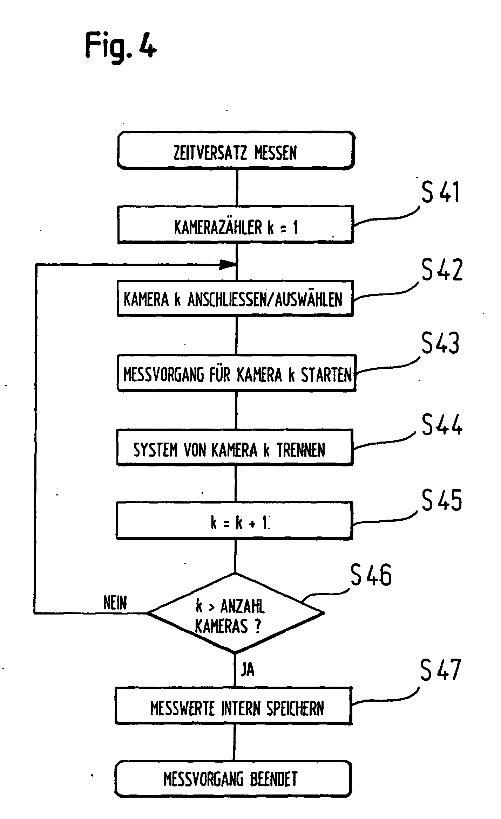

Figur 4 zeigt ein Flussdiagramm zur Erläuterung eines Ausführungsbeispiels der Erfassung von Zeitversätzen zwischen den freilaufenden Kamerauhren.

In einem ersten Schritt S41 initialisiert die Zeitversatzerfassungseinrichtung 4 einen Kamerazähler in der Synchronisationsvorrichtung 3, der Identifikation der verschiedenen Kameras dient. In einem nächsten Schritt S42 wird die erste Kamera an diese Synchronisationsvorrichtung 3 über die Schnittstelle 33 angeschlossen, oder, wenn die Schnittstelle 33 den Anschluss von mehreren Kameras parallel erlaubt, die erste Kamera mittels Benutzereingabe beispielsweise über Maus oder Tastatur unter Softwaresteuerung ausgewählt. Im Schritt S43 wird für die erste Kamera ein Messvorgang gestartet, worin die aktuell von der in die Kamera eingebauten Uhr angezeigte Uhrzeit ausgelesen wird und zusammen mit der bei der Auslesung der Kamerauhrzeit aktuell von der Referenzuhr in der Synchronisationsvorrichtung 3 angezeigten Referenzuhrzeit abgespeichert wird. Danach wird in Schritt S44 die erste Kamera von der Synchronisationsvorrichtung 3 getrennt, in Schritt S45 der Kamerazähler um eins erhöht, und danach erneut die Sequenz der Schritte S42 bis S45 für die nächste Kamera durchgeführt, bis in Schritt S46 erkannt wird, dass die aktuellen Uhrzeiten aller Kameras ausgelesen worden und zusammen mit der jeweiligen Kamerainformation gespeichert worden sind. Danach wird in Schritt S47 anhand der für jede Kamera k gespeicherten ausgelesenen Uhrzeiten und den beim Auslesen angezeigten Referenzuhrzeiten bestimmt, welchen Zeitversatz die Kameras jeweils zueinander haben. Dies geschieht gemäß dem Ausführungsbeispiel nach Figur 4 in Schritt S47 derart, dass für jede Kamera eine Differenz ermittelt wird zwischen der ausgelesenen Uhrzeit und der beim Auslesen angezeigten Referenzuhrzeit, um eine Zeitdifferenz für jede der Kameras zu erhalten. Um zwischen zwei Kameras den jeweiligen Zeitversatz zu ermitteln, genügt es, die Zeitdifferenzen, die für die beiden Kameras erhalten wurden, voneinander abzuziehen. Diese Zeitversätze zwischen den Kameras werden in Schritt S47 entweder in Form einer Matrix gespeichert, deren Zeilen und Spaltenindices die jeweiligen Kameranummern sind, oder durch Aufrufen einer Prozedur erhalten, die zwei Kameranummern als Übergabeparameter erhält und den Zeitversatz dazwischen auf der Grundlage der voranstehend beschriebenen Berechnungen zurückgibt.

Weil viele Camcorder die aktuelle Uhrzeit nur mit einer Auflösung von Sekunden anzeigen, wird der Vorgang des Auslesens der von der Kamerauhr aktuell angezeigten Uhrzeit in Schritt S43 bevorzugt wiederholt durchgeführt, während die Kamera an die Synchronisationsvorrichtung 3 angeschlossen bleibt. Die dient dazu, die zeitliche Auflösung bei der Erfassung der Kamerauhrzeit zu erhöhen. In Schritt S43 wird die Kamerauhrzeit vorteilhaft über einen Zeitraum von einer bis mehreren Sekunden mit einer Häufigkeit wiederholt ausgelesen, die mindestens der Bildfrequenz entspricht, also der Halbbildfrequenz oder Vollbildfrequenz je nach dem verwendeten Aufzeichnungsformat der Videosignale. Sobald ein Wechsel der Sekundenanzeige in dieser Abfolge von Zeitmessungen festgestellt wird, wird in der Einrichtung 4 der Synchronisationsvorrichtung 3 die von der Referenzuhr angezeigte Zeit, die intern mit einer mindestens der Halbbild- oder Vollbildperiode entsprechenden zeitlichen Auflösung angezeigt wird, mit dieser Auflösung ausgelesen und gespeichert. Auf diese Weise lassen sich Zeitversätze zwischen den jeweiligen Kamerauhren mit einer zeitlichen Auflösung im Bereich der Halbbild- bzw. Vollbildperiode oder soger mit noch höherer Auflösung erfassen, obwohl die von den Kamerauhren angezeigte Zeit lediglich eine Auflösung von Sekunden aufweist.

Auch bei der Aufzeichnung ist bei Camcordern die zeitliche Auflösung der Aufnahmezeitinformation üblicherweise nur eine Sekunde, so dass eine Vielzahl von Bildern in Abfolge, entsprechend der Anzahl von aufgezeichneten Bildern pro Sekunde, dieselbe Aufzeichnungszeitinformation aufweisen. Deshalb wird in Schritt S36 in Figur 3 bevorzugt eine Abfolge von aufgenommenen Bildern auf einen Wechsel der Sekundenanzeige in der Aufzeichnungszeitinformation der jeweiligen Bilder hin untersucht, und ausgehend von dem ersten Bild nach einem solchen Wechsel der Sekundenanzeige eine Durchnummerierung der Bilder der darauf folgenden Sekunde vorgenommen, um auf diese Weise für jedes Bild eine Aufzeichnungsinformation mit einer auf die Halbbild- bzw. Vollbildperiode erhöhten Auflösung zu erhalten. Auf der Grundlage dieser so erhaltenen, höher aufgelösten Aufnahmezeitinformation kann dann in Schritt S36 die Synchronisation der verschiedenen Videosignale mit Halbbildperiodengenauigkeit bzw. Vollbildperiodengenauigkeit je nach Aufzeichnungsformat, oder sogar höher, vorgenommen werden.

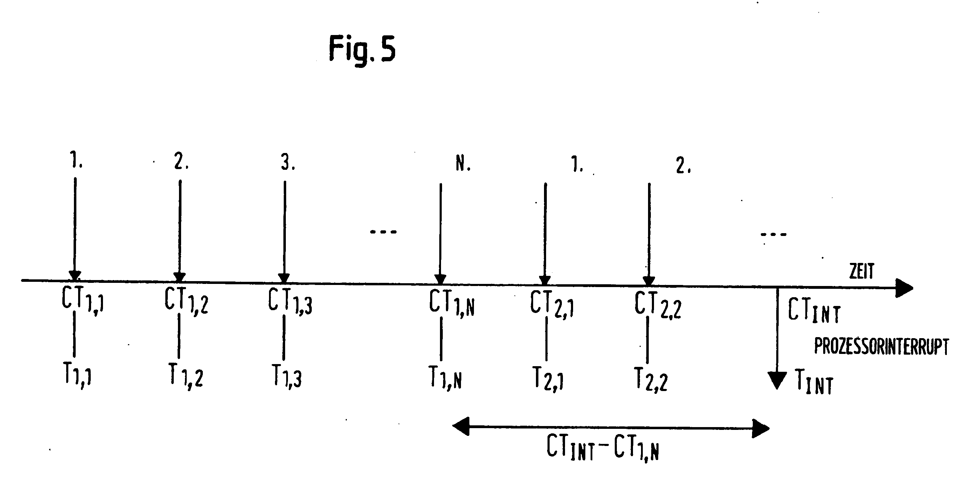

Figur 5 zeigt ein Zeitdiagramm zur Erläuterung eines Ausführungsbeispiels für das Auslesen der aktuell von einer Kamerauhr angezeigten Zeit, wenn diese über einen digitalen seriellen Bus, beispielsweise eine serielle Verbindung nach IEEE 1394, mit der Synchronisationsvorrichtung 3 verbunden ist. Über eine derartige serielle Verbindung werden die Daten eines jeden Halb- oder Vollbildes in eine Anzahl von N Datenpaketen zerlegt zeitlich hintereinander über die serielle Verbindung übertragen. Dies ist in Figur 5 mit Hilfe der auf die Zeitachse weisenden Pfeile angedeutet, die von 1 bis N durchnummeriert sind. Eine Abfolge von N Pfeilen bezeichnet jeweils die Übertragung von N Datenpaketen, auf welche die Daten eines Halb- oder Vollbildes aufgeteilt sind. Mindestens eines der Pakete, in denen die Daten eines Halb-oder Vollbildes enthalten sind, enthält außerdem die Aufnahmezeitinformation, die die freilaufende Kamerauhr anzeigte, als das Halb- bzw. Vollbild aufgezeichnet wurde. Zu Zwecken der Erläuterung sei angenommen, dass diese Information im Paket N eines jeden Bildes enthalten ist.

Um in dem in Figur 2a dargestellten Vorgang der Zeitversatzerfassung zwischen den verschiedenen Kameras festzustellen, welche Zeit die interne Referenzzeituhr der Synchronisationsvorrichtung 3 beim Auslesen der von der jeweiligen Kamerauhr aktuell angezeigten Uhrzeit anzeigte, wird gemäß dem Ausführungsbeispiel der Figur 5 ausgenutzt, dass das Firewire-Bussystem nach IEEE 1349 eine Zykluszeitinformation CT vorsieht, die als zu dem jeweiligen übertragenen Datenpaket gehörend übertragen wird, allerdings keine absolute Zeitinformation enthält, denn die Zykluszeit CT wird bei jeder Herstellung einer neuen Verbindung neu initialisiert. In Fig. 5 bezeichnet CT_{xy} die Zykluszeit des Datenpaketes y für das Halbbild bzw. Vollbild x.

Im Ausführungsbeispiel nach Figur 5 wird beim Empfang eines jeden Datenpakets diese Zykluszeit des Datenpakets zusätzlich zu den Videodaten des Pakets abgespeichert. Unterhalb der Zykluszeiten CT_{xy} ist in Figur 5 die Zeit T_{xy} dargestellt, die die Referenzzeituhr der Synchronisationsvorrichtung 3 zum Zeitpunkt des Empfangs der jeweiligen Datenpakete anzeigte, die im allgemeinen nicht sofort beim Empfang des die Aufnahmezeitinformation enthaltenden Datenpakets N ausgelesen werden kann, weil der Prozessor der Synchronisationsvorrichtung 3 gerade anderweitig beschäftigt ist. Um zu erfassen, welche Zeit T_{x,n} die Referenzzeituhr beim Empfang von beispielsweise dem letzten Paket n des Halbbildes oder Vollbildes x anzeigte, wird an den Prozessor, auf welchem das Programm zur Zeitversatzerfassung läuft, in ungefähr regelmäßigen Zeitabständen, vorteilhaft etwa einmal pro Bild, eine Interruptanforderung gerichtet. Innerhalb der daraufhin aufgerufenen Interruptroutine wird die aktuelle Zykluszeit CT_{INT} des seriellen Busses zum Zeitpunkt des Interrupts ausgelesen und die zu diesem Zeitpunkt von der Referenzzeituhr angezeigte Referenzzeit T_{INT} ausgelesen. Durch eine Differenzbildung von CT_{INT} und der Zykluszeit CT_{x,N} zum Zeitpunkt des Empfangs des Paketes N des Halbbildes bzw. Vollbildes X kann die Zeit bestimmt werden, die vergangen ist, seitdem dieses Paket empfangen wurde. Diese Zeit wird dann von der Referenzzeit T_{INT} abgezogen, um die Zeit T_{x,N} zu erhalten, die die Referenzzeituhr anzeigte, als das Paket N des Bildes X empfangen wurde. Auf der Grundlage der so ermittelten Referenzzeit kann dann der Zeitversatz zwischen den jeweiligen Kameras, wie oben beschrieben, präzise erfasst werden.

Die vorliegende Erfindung lässt sich besonders vorteilhaft mit handelsüblichen DV Kameras verwenden. Das erfindungsgemäße Synchronisationsverfahren kann dabei vorteilhaft ausnutzen, dass bei dieser Art von Kameras jedem Einzelbild das in der Kamera eingestellte Datum und die Uhrzeit mitgegeben wird, die eine freilaufende Uhr in der Kamera bei der Aufnahme anzeigt. Es ist nicht erforderlich, die einzelnen Uhren der Kameras durch Synchronisation im Gleichtakt laufen zu lassen. Stattdessen wird erfindungsgemäß in einem von der Aufzeichnung der Szenen unabhängigen Schritt die Zeitdifferenz aller beteiligten Kameras ermittelt. Anhand der den Einzelbildern mitgegebenen Zeitstempel können die aufgezeichneten Bilder dann entsprechend der Zeitdifferenz zwischen den beteiligten Kamerauhren sortiert und synchronisiert werden. Wie beschrieben, können für die Erfassung des Zeitversatzes die beteiligten DV Kameras mittels des weit verbreiteten IEEE 1394 Anschlusses (Firewire) an die Synchronisationsvorrichtung 3 angeschlossen werden, bevorzugt nacheinander und in zeitlicher Nähe zur Aufnahme der Szenen. Um eine Zeitauflösung im erforderlichen Bereich zu erhalten, wird ein Sekundenwechsel im Zeitstempel der Life-Bilddaten abgewartet, wie beschrieben, der dann mit einer Auflösung von mindestens 1/25 sec für Pal oder 1/30 sec für NTSC die Echtzeituhr der Kamera wiederspiegelt. Diese wird dann in Relation gesetzt mit einer in der Synchronsationsvorrichtung laufenden Referenzuhr. Zur weiteren Erhöhung der Genauigkeit wird, wie beschrieben, die Zykluszeit des verwendeten Firewire-Bussystems verwendet, um die Latenzzeit zwischen dem Empfang des Zeitstempels über die Schnittstelle und dem prozessorgesteuert vorgenommenen Vergleich mit der Referenzzeituhr möglichst gering zu halten.

Wenn die Zeitversatzmessung mehrfach vorgenommen wird, beispielsweise vor und nach den Dreharbeiten, kann durch lineare Interpolation der gemessenen Zeitversätze über der Zeit der Unterschied im Gleichlauf der freilaufenden Kamerauhren sogar über längere Zeiträume kompensiert werden.

Um die Erfassung der Zeitversätze zwischen den beteiligten Kameras in zeitlicher Nähe zu den Dreharbeiten zu erleichtern, kann es vorteilhaft sein, die Zeiterfassungseinrichtungen 4 als separat betreibbares Modul auszubilden, beispielsweise mit einem eigenen Prozessor. Das Modul gestattet eine Mitnahme an den Drehort, während die übrigen Bestandteile der Synchronisationsvorrichtung, die auch voluminöse Videoschnitteinrichtungen, Speichereinrichtungen für die verschiedenen Videosignale von den Kameras und für das Schnittergebnis, DVD-Brenner etc umfassen kann, nicht mitgenommen werden müssen. Dabei braucht das Modul nur diejenigen oben beschrieben Funktionen zu implementieren, die für die Erfassung derjenigen Informationen von den jeweiligen Kameras erforderlich sind, aus denen die jeweiligen Zeitversätze von der Synchronisationsvorrichtung oder von dem Modul errechnet werden können.

## Patentansprüche

1. Verfahren zum Synchronisieren von Videosignalen, mit den Schritten
- Empfangen eines ersten, eine Abfolge von Bildern darstellenden Videosignals, welches für mindestens eines der Bilder des ersten Videosignals Aufnahmezeitinformation darüber enthält, welche Zeit eine erste freilaufende Uhr anzeigte, als das Bild aufgenommen wurde;
- Empfangen mindestens eines zweiten, eine Abfolge von Bildern darstellenden Videosignals, welches für mindestens eines der Bilder des zweiten Videosignals Aufnahmezeitinformation darüber enthält, welche Zeit eine zweite freilaufende Uhr anzeigte, als das Bild aufgenommen wurde; **gekennzeichnet durch**
- das Erfassen eines Zeitversatzes zwischen der ersten Uhr und der zweiten Uhr anhand den jeweils von den beiden freilaufenden Uhren aktuell angezeigten Uhrzeiten, wobei der Zeitversatz anzeigt, um wie viel die erste Uhr gegenüber der zweiten Uhr vor- oder nachgeht; und
- das Behandeln von Bildern des ersten Videosignals und des zweiten Videosignals als gleichzeitig aufgenommen, deren Aufnahmezeiten gemäß den Aufnahmezeitinformationen in dem ersten Videosignal und dem zweiten Videosignal voneinander entsprechend dem erfassten Zeitversatz zwischen der ersten Uhr und der zweiten Uhr abweichen.

2. Verfahren nach Anspruch 1, **dadurch gekennzeichnet, dass** der Zeitversatz zwischen der ersten Uhr und der zweiten Uhr erfasst wird durch gleichzeitiges Auslesen der von der ersten Uhr aktuell angezeigten Zeit und der von der zweiten aktuell Uhr angezeigten Zeit.

3. Verfahren nach Anspruch 1, **dadurch gekennzeichnet, dass** der Zeitversatz zwischen der ersten Uhr und der zweiten Uhr erfasst wird durch
- Erfassen eines Zeitversatzes zwischen der von der ersten-Uhr angezeigten Zeit und einer von einer dritten freilaufenden Uhr angezeigten Zeit;
- danach Erfassen eines Zeitversatzes zwischen der von der zweiten Uhr angezeigten Zeit und der von der dritten Uhr angezeigten Zeit; und
- Berechnen des Zeitversatzes zwischen der ersten Uhr und der zweiten Uhr aus dem erfassten Zeitversatz zwischen der ersten Uhr und der dritten Uhr und dem erfassten Zeitversatz zwischen der zweiten und der dritten Uhr.

4. Verfahren nach Anspruch 1, **dadurch gekennzeichnet, dass** der Zeitversatz zwischen der ersten und der zweiten Uhr erfasst wird durch
- Stellen der dritten Uhr nach der von der ersten Uhr aktuell angezeigten Zeit; und
- danach Erfassen des Zeitversatzes zwischen der von der zweiten Uhr angezeigten Zeit und der von der dritten Uhr angezeigten Zeit.

5. Verfahren nach einem der vorangehenden Ansprüche, **dadurch gekennzeichnet, dass**
- die ersten und zweiten Videosignale von einem oder mehreren Aufzeichnungsträgern wiedergegebene Signale sind, auf den bzw. die sie zuvor zusammen mit jeweiligen Tonsignalen aufgezeichnet wurden.

6. Verfahren nach einem der vorangehenden Ansprüche, **gekennzeichnet durch**
- Speichern von zumindest einem oder mehreren oder allen der empfangenen Videosignale in einem oder mehreren Datenspeichern;
wobei der Schritt des Behandelns von Bildern des ersten Videosignals und des zweiten Videosignals als gleichzeitig aufgenommen umfasst:
- Erzeugen eines synchron aus Bild und Ton zusammengesetzten Videosignals aus einem zu dem ersten Videosignal gehörenden Bild und/oder Ton und demjenigen Bild und/oder Ton des zweiten empfangenen Videosignals, dessen Aufnahmezeit von der Aufnahmezeit des Bildes und Tons des ersten Videosignals entsprechend dem erfassten Zeitversatz zwischen der ersten Uhr und der zweiten Uhr abweicht.

7. Verfahren nach einem der vorangehenden Ansprüche, **dadurch gekennzeichnet, dass** der Schritt des Behandelns von Bildern des ersten Videosignals und des zweiten Videosignals als gleichzeitig aufgenommen umfasst:
- Korrigieren der Aufnahmezeitinformation zumindest eines der Videosignale gemäß dem erfassten Zeitversatz zwischen der ersten Uhr und der zweiten Uhr.

8. Verfahren nach einem der vorangehenden Ansprüche, **dadurch gekennzeichnet, dass** der Schritt des Erfassens des Zeitversatzes zwischen der ersten Uhr und der zweiten Uhr vor und/oder während und/oder nach dem Empfangen des ersten Videosignals und des zweiten Videosignals durchgeführt wird.

9. Verfahren nach einem der vorangehenden Ansprüche, **gekennzeichnet, dass**
- der Schritt des Erfassens des Zeitversatzes zwischen der ersten Uhr und der zweiten Uhr in einem zeitlichen Abstand von der ersten Erfassung erneut durchgeführt wird; und
- aus den jeweils erfassten Zeitversätzen und dem zeitlichen Abstand zwischen ihrer Erfassung der Zeitversatz zeitabhängig extrapoliert wird.

10. Verfahren nach einem der vorangehenden Ansprüche, **dadurch gekennzeichnet, dass** bei der Erfassung des Zeitversatzes zwischen der ersten Uhr und der zweiten Uhr
- die erste Uhr und die zweite Uhr ihre Uhrzeiten in Zeiteinheiten anzeigen, die einem Vielfachen der Zeit zwischen aufeinanderfolgenden Videobildern entsprechen;
- die Zeit zwischen dem Auftreten eines Wechsels der Zeiteinheitenanzeige der ersten Uhr und dem Auftreten eines Wechsels der Zeiteinheitenanzeige der zweiten Uhr erfasst wird; und
- der Zeitversatz zwischen der ersten Uhr und der zweiten Uhr aufgrund den von der ersten Uhr und der zweiten Uhr angezeigten Uhrzeiten und der erfassten Zeit zwischen einem Wechsel der Zeiteinheitenanzeige der ersten Uhr und einem Wechsel der Zeiteinheitenanzeige der zweiten Uhr erfasst wird.

11. Verfahren nach Anspruch 10, **dadurch gekennzeichnet, dass** die erste Uhr und die zweite Uhr ihre jeweiligen Uhrzeiten in Stunden, Minuten und Zeiteinheiten von Sekunden anzeigen.

12. Verfahren nach einem der vorangehenden Ansprüche, **dadurch gekennzeichnet, dass**
- das erste Videosignal für jedes einzelne Bild explizite Aufnahmezeitinformation darüber enthält, welche Uhrzeit die erste freilaufende Uhr anzeigte, als das jeweilige Bild aufgenommen wurde; und
- das zweite Videosignal für jedes einzelne Bild explizite Aufnahmezeitinformation darüber enthält, welche Uhrzeit die zweite freilaufende Uhr anzeigte, als das jeweilige Bild aufgenommen wurde. .

13. Verfahren nach einem der vorangehenden Ansprüche, **dadurch gekennzeichnet, dass**
- die im ersten und zweiten Videosignal enthaltenen Aufnahmezeitinformationen die jeweilige Aufnahmezeiten in Zeiteinheiten anzeigen, die einem Vielfachen der Zeit zwischen aufeinanderfolgenden Videobildern entsprechen;
- die für ein Bild in dem jeweiligen Videosignal enthaltene Aufnahmezeitinfo-rmation korrigiert wird gemäß dem Zeitraum oder der Anzahl von Bildern zwischen dem Auftreten eines Wechsels der Zeiteinheitenanzeige in der Aufnahmezeitinformation und dem Bild, und
- solche Bilder des ersten Videosignals und des zweiten Videosignals als gleichzeitig aufgenommen behandelt werden, deren korrigierte Aufnahmezeiten voneinander entsprechend dem erfassten Zeitversatz zwischen der ersten Uhr und der zweiten Uhr abweichen.

14. Verfahren nach Anspruch 13, **dadurch gekennzeichnet, dass** die in dem ersten und zweiten Videosignal enthaltenen Aufnahmezeitinformationen die jeweiligen Aufnahmezeiten in Stunden, Minuten und Zeiteinheiten von Sekunden anzeigen.

15. Verfahren nach einem der vorangehenden Ansprüche, **dadurch gekennzeichnet, dass**
- das erste Videosignal ein Signal von einer ersten Videokamera und das zweite Videosignal ein Signal von einer zweiten Videokamera ist; und
- die erste Uhr eine in die erste Kamera eingebaute Echtzeituhr und die zweite Uhr eine in die zweite Kamera eingebaute Echtzeituhr ist.

16. Verfahren nach Anspruch 15, **dadurch gekennzeichnet, dass** die empfangenen Videosignale aufgezeichnete Videosignale sind, die von jeweiligen Speichermedien der ersten bzw. zweiten Videokamera wiedergegeben werden.

17. Verfahren nach einem der vorangehenden Ansprüche, **dadurch gekennzeichnet, dass**
- die empfangenen Videosignale digitale Videosignale sind,
- die Daten eines jeden Bildes eines empfangenen Videosignals in Datenpakete unterteilt werden, die nacheinander übertragen werden;
- das mindestens ein Paket eines jeden Bildes die Aufnahmezeitinformation für das jeweilige Bild enthält; und
- zu jedem empfangenen Paket eine fortlaufende Zykluszeitinformation gespeichert wird.

18. Verfahren nach Anspruch 17, **dadurch gekennzeichnet, dass** zur Erfassung des Zeitversatzes zwischen der ersten Uhr und der zweiten Uhr Signale im Format der digitalen Videosignale empfangen werden, worin mindestens ein Paket eines jeden Bildes die von der jeweiligen Uhr aktuell angezeigte Uhrzeit enthält.

19. Verfahren nach Anspruch 18, **dadurch gekennzeichnet, dass** der Zeitversatz zwischen der ersten Uhr und der zweiten Uhr erfasst wird
- aus dem Unterschied zwischen der Zeitmarkierung eines ersten empfangenen Pakets, das die von der ersten Uhr aktuell angezeigte Uhrzeit enthält, und der fortlaufenden Zeitmarkierung eines zweiten empfangenen Pakets, das die von der zweiten Uhr aktuell angezeigte Uhrzeit enthält, und
- aus dem Unterschied zwischen den in dem ersten Paket und dem zweiten Paket angezeigten Uhrzeiten.

20. Verfahren nach einem der vorangehenden Ansprüche, **dadurch gekennzeichnet, dass** die Bilder Vollbilder oder Halbbilder sind.

21. Vorrichtung zum Synchronisieren von Videosignalen, mit
- Einrichtungen zum Empfangen eines ersten, eine Abfolge von Bildern darstellenden Videosignals, welches für mindestens eines der Bilder des ersten Videosignals Aufnahmezeitinformation darüber enthält, welche Zeit eine erste freilaufende Uhr anzeigte, als das Bild aufgenommen wurde, sowie zum Empfangen mindestens eines zweiten, eine Abfolge von Bildern darstellenden Videosignals, welches für mindestens eines der Bilder des zweiten Videosignals Aufnahmezeitinformation darüber enthält, welche Zeit eine zweite freilaufende Uhr anzeigte, als das Bild aufgenommen wurde; **gekennzeichnet durch**
- Einrichtungen zum Erfassen eines Zeitversatzes zwischen der ersten Uhr und der zweiten Uhr, anhand der jeweils von den beiden freilaufenden Uhren aktuell angezeigten Uhrzeiten, wobei der Zeit Versatz anzeigt, um wie viel die erste Uhr gegenüber der zweiten Uhr vor- oder nachgeht; und
- Synchronisationseinrichtungen zum Behandeln von Bildern des ersten Videosignals als gleichzeitig mit Bildern des zweiten Videosignals aufgenommen, deren Aufnahmezeiten gemäß den Aufnahmezeitinformationen in dem ersten Videosignal und dem zweiten Videosignal voneinander entsprechend dem Zeitversatz zwischen der ersten Uhr und der zweiten Uhr abweichen.

22. Vorrichtung nach Anspruch 21, **dadurch gekennzeichnet, dass** die Einrichtung zum Erfassen des Zeitversatzes zwischen der ersten Uhr und der zweiten Uhr umfasst:
- eine dritte freilaufende Uhr;
- Einrichtungen zum Erfassen eines Zeitversatzes zwischen der von der ersten Uhr angezeigten Zeit und der von der dritten Uhr angezeigten Zeit;
- Einrichtungen zum Erfassen eines Zeitversatzes zwischen der von der zweiten Uhr angezeigten Zeit und der von der dritten Uhr angezeigten Zeit; und
- Einrichtungen zum Berechnen des Zeitversatzes zwischen der ersten Uhr und der zweiten Uhr aus dem erfassten Zeitversatz zwischen der ersten Uhr und der dritten Uhr und dem erfassten Zeitversatz zwischen der zweiten und der dritten Uhr.

23. Vorrichtung nach Anspruch 21, **dadurch gekennzeichnet, dass** die Einrichtung zum Erfassen des Zeitversatzes zwischen der ersten Uhr und der zweiten Uhr umfasst:
- eine dritte Uhr;
- Einrichtungen zum Herstellen eines Gleichlaufs zwischen der ersten Uhr und einer dritten Uhr durch Einstellen der dritten Uhr gemäß der von der ersten Uhr angezeigten Zeit; und
- Einrichtungen zum Erfassen des Zeitversatzes zwischen der von der zweiten Uhr angezeigten Zeit und der von der dritten Uhr angezeigten Zeit.

24. Vorrichtung nach einem der Ansprüche 21 bis 23, **gekennzeichnet durch**
- Einrichtungen zum Speichern von zumindest einem der empfangenen ersten und zweiten Videosignale;
- wobei die Synchronisationseinrichtungen zum Behandeln von Bildern des ersten Videosignals und des zweiten Videosignals als gleichzeitig aufgenommen umfassen:
- Einrichtungen zum Erzeugen eines synchron aus Bild und Ton zusammengesetzten Videosignals aus einem zu dem ersten Videosignal gehörenden Bild und/oder Ton und demjenigen Bild und/oder Ton des zweiten Videosignals, dessen Aufnahmezeit von der Aufnahmezeit des Bildes und Tons des ersten Videosignals entsprechend dem erfassten Zeitversatz zwischen der ersten Uhr und der zweiten Uhr abweicht.

25. Vorrichtung nach einem der Ansprüche 21 bis 24, **dadurch gekennzeichnet, dass** die Synchronisationseinrichtungen umfassen:
- Einrichtungen zum Korrigieren der Aufnahmezeitinformation zumindest eines der Videosignale gemäß dem erfassten Zeitversatz zwischen der ersten Uhr und der zweiten Uhr.

26. Vorrichtung nach einem der Ansprüche 21 bis 25, **gekennzeichnet durch**
- Einrichtungen zum wiederholten Erfassen des Zeitversatzes zwischen der ersten Uhr und der zweiten Uhr;
- Einrichtungen.zum Erfassen des zeitlichen Abstandes zwischen den wiederholten Erfassungen des Zeitversatzes; und
- Einrichtungen zum Extrapolieren des Zeitversatzes über der Zeit aus den jeweils erfassten Zeitversätzen und dem zeitlichen Abstand zwischen ihrer Erfassung.

27. Vorrichtung nach einem der Ansprüche 21 bis 26, **dadurch gekennzeichnet, dass** die Einrichtungen zum Erfassen eines ' Zeitversatzes zwischen der ersten Uhr und der zweiten Uhr umfassen:
- Einrichtungen zum Erfassen der Zeit zwischen dem Auftreten eines Wechsels der Zeiteinheitenanzeige der ersten Uhr und dem Auftreten eines Wechsels der Zeiteinheitenanzeige der zweiten Uhr;
- wobei die Einrichtungen zum Erfassen des Zeitversatzes zwischen der ersten Uhr und der zweiten Uhr ausgebildet sind, den Zeitversatz aus den von der ersten Uhr und der zweiten Uhr angezeigten Uhrzeiten und der erfassten Zeit zwischen einem Wechsel der Zeiteinheitenanzeige der ersten Uhr und einem Wechsel der Zeiteinheitenanzeige der zweiten Uhr zu berechnen.

28. Vorrichtung nach Anspruch 27, **dadurch gekennzeichnet, dass** die erste Uhr und die zweite Uhr ihre jeweiligen Uhrzeiten in Stunden, Minuten und Zeiteinheiten von Sekunden anzeigen.

29. Vorrichtung nach einem der Ansprüche 21 bis 28, **gekennzeichnet durch**
- Einrichtungen zum Erfassen des Fortschreitens der im ersten und zweiten Videosignal angezeigten Aufnahmezeiten;
- Einrichtungen zum Erfassen des Zeitraumes oder der Anzahl von Bildern zwischen einem jeweiligen Bild des ersten bzw. zweiten Videosignals und dem Fortschreiten der Aufnahmezeit; und
- Einrichtungen zum Korrigieren der in dem jeweiligen Videosignal für das jeweilige Bild enthaltenen Aufnahmezeitinformation gemäß dem erfassten Zeitraum oder der erfassten Anzahl von Bildern;
- wobei die Synchronisationseinrichtungen ausgebildet sind, solche Bilder des ersten Videosignals und des zweiten Videosignals als gleichzeitig aufgenommen zu behandeln, deren korrigierte Aufnahmezeiten voneinander entsprechend dem erfassten Zeitversatz zwischen der ersten Uhr und der zweiten Uhr abweichen.

30. Vorrichtung nach einem der Ansprüche 21 bis 29, **dadurch gekennzeichnet, dass**
- die Einrichtungen zum Erfassen eines Zeitversatzes zwischen der ersten Uhr und der zweiten Uhr ausgebildet sind, den Zeitversatz
- aus der Differenz zwischen einer Zeitmarkierung eines ersten empfangenen Datenpakets, das die von der ersten Uhr aktuell angezeigte Uhrzeit enthält, und der fortlaufenden Zeitmarkierung eines zweiten empfangenen Pakets, das die von der zweiten Uhr aktuell angezeigte Uhrzeit enthält, sowie
- aus dem Unterschied zwischen den in dem ersten Paket und dem zweiten Paket angezeigten Uhrzeiten zu berechnen.

31. Vorrichtung nach einem der vorangehenden Ansprüche 21 bis 30, **dadurch gekennzeichnet, dass**
- die Einrichtungen zum Erfassen eines Zeitversatzes zwischen der ersten Uhr und der zweiten Uhr Bestandteil eines tragbaren, unabhängig betreibbaren Moduls sind; und
- eine Schnittstelle zur Übertragung von Information von dem Modul an die übrige Vorrichtung vorgesehen ist, über welche das tragbare Gerät mit der übrigen Vorrichtung trennbar gekoppelt ist.

32. Vorrichtung zum Erfassen eines Zeitversatzes zwischen freilaufenden Videokamerauhren, mit
- einer Schnittstelle zur Verbindung mit einer ersten Videokamera und mindestens einer zweiten Videokamera;
- Einrichtungen zum Auslesen der von einer ersten Uhr in der ersten Kamera aktuell angezeigten Uhrzeit, und zum Auslesen der von einer zweiten Uhr in der zweiten Kamera aktuell angezeigten Uhrzeit;
- Einrichtungen zum Speichern von Information betreffend einen Zeitversatz zwischen der ersten Uhr und der zweiten Uhr, der anzeigt, um wie viel die erste Uhr gegenüber der zweiten Uhr vor-.oder nachgeht; und
- einer Schnittstelle, um die gespeicherte Information betreffend den Zeitversatz zwischen den Uhren aus dem Modul auszulesen.

33. Vorrichtung zum Synchronisier.en von Videosignalen, mit
- Einrichtungen zum Empfangen eines ersten, eine Abfolge von Bildern darstellenden Videosignals, welches für mindestens eines der Bilder des ersten Videosignals Aufnahmezeitinformation darüber enthält, welche Zeit eine erste freilaufende Uhr anzeigte, als das Bild aufgenommen wurde, sowie zum Empfangen mindestens eines zweiten, eine Abfolge von Bildern darstellenden Videosignals, welches für mindestens eines der Bilder des zweiten Videosignals Aufnahmezeitinformation darüber enthält, welche Zeit eine zweite freilaufende Uhr anzeigte, als das Bild aufgenommen wurde;
- Schnittstelleneinrichtungen zum Auslesen aus einer Vorrichtung nach Anspruch 32 von Information betreffend einen Zeitversatz zwischen der ersten Uhr und der zweiten Uhr, der anzeigt, um wie viel die erste Uhr gegenüber der zweiten Uhr vor- oder nachgeht; und
- Synchronisationseinrichtungen zum Behandeln von Bildern des ersten Videosignals als gleichzeitig mit Bildern des zweiten Videosignals aufgenommen, deren Aufnahmezeiten gemäß den Aufnahmezeitinformationen in dem ersten Videosignal und dem zweiten Videosignal voneinander entsprechend dem Zeitversatz zwischen der ersten Uhr und der zweiten Uhr abweichen.

34. Computerprogramm, das in den internen Speicher eines digitalen Computers geladen werden kann und Softwarecodeabschnitte umfasst, mit denen die Verfahrensschritte gemäß einem der vorangehenden Ansprüche 1 bis 20 ausgeführt werden,- wenn die Softwarecodeabschnitte auf einem Computer ausgeführt werden.

35. Computergeeignetes Medium, auf welchem ein Computerprogramm gespeichert ist, das computergeeignete Softwarecodeabschnitte umfasst, mit denen die Verfahrensschritte gemäß einem der vorangehenden Ansprüche 1 bis 20 ausgeführt werden, wenn die Softwarecodeabschnitte auf einem Computer ausgeführt werden.

## Claims

1. Process for synchronising video signals having the steps
- receiving a first video signal representing a sequence of images which contains recording time information for at least one of the images of the first video signal, on which time a first free-running clock indicated as the image was recorded;
- receiving at least a second video signal representing a sequence of images which contains recording time information for at least one of the images of the second video signal, on which time a second free-running clock indicated as the image was recorded; **characterised by**
- registering a time lag between the first clock and the second clock using the particular clock times actually indicated by the two free-running clocks, wherein the time lag indicates by how much the first clock is fast or slow with respect to the second clock; and
- treatment of images of the first video signal and of the second video signal as recorded simultaneously, the recording times of which according to the recording time information in the first video signal and the second video signal deviate from one another corresponding to the registered time lag between the first clock and the second clock.

2. Process according to claim 1, **characterised in that** the time lag between the first clock and the second clock is registered by simultaneous read-out of the time actually indicated by the first clock and the time actually indicated by the second clock.

3. Process according to claim 1, **characterised in that** the time lag between the first clock and the second clock is registered by
- registering a time lag between the time indicated by the first clock and a time indicated by a third free-running clock;
- then registering a time lag between the time indicated by the second clock and the time indicated by the third clock; and
- calculating the time lag between the first clock and the second clock from the registered time lag between the first clock and the third clock and the registered time lag between the second and the third clock.

4. Process according to claim 1, **characterised in that** the time lag between the first and the second clock is registered by
- setting the third clock after the time actually indicated by the first clock; and
- then registering the time lag between the time indicated by the second clock and the time indicated by the third clock.

5. Process according to one of the preceding claims, **characterised in that**
- the first and second video signals are signals reproduced by one or more recording media, on which they have been recorded beforehand together with particular sound signals.

6. Process according to one of the preceding claims, **characterised by**
- storing at least one or more or all of the received video signals in one or more data memories;
wherein the step of treating images of the first video signal and of the second video signal as recorded simultaneously comprises:
- producing a video signal composed synchronously of image and sound from an image and/or sound belonging to the first video signal and that image and/or sound of the second received video signal, the recording time of which deviates from the recording time of the image and sound of the first video signal corresponding to the registered time lag between the first clock and the second clock.

7. Process according to one of the preceding claims, **characterised in that** the step of treating images of the first video signal and of the second video signal as recorded simultaneously comprises:
- correcting the recording time information of at least one of the video signals according to the registered time lag between the first clock and the second clock.

8. Process according to one of the preceding claims, **characterised in that** the step of registering the time lag between the first clock and the second clock is carried out before and/or during and/or after receiving the first video signal and the second video signal.

9. Process according to one of the preceding claims, **characterised in that**
- the step of registering the time lag between the first clock and the second clock is carried out again at a temporal interval from the first registration; and
- is extrapolated as a function of time from the particular registered time lags and the temporal interval between their registration of time lag.

10. Process according to one of the preceding claims, **characterised in that** during registration of time lag between the first clock and the second clock
- the first clock and the second clock indicate their clock times in time units which correspond to a multiple of the time between sequential video images;
- the time between the occurrence of a change in the time unit display of the first clock and the occurrence of a change in the time unit display of the second clock is registered; and
- the time lag between the first clock and the second clock is registered due to the clock times indicated by the first clock and the second clock and the registered time between a change in the time unit display of the first clock and a change in the time unit display of the second clock.

11. Process according to claim 10, **characterised in that** the first clock and the second clock indicate their particular clock times in hours, minutes and time units of seconds.

12. Process according to one of the preceding claims, **characterised in that**
- the first video signal contains explicit recording time information for each individual image, on which clock time the first free-running clock indicated as the particular image was recorded; and
- the second video signal contains explicit recording time information for each individual image, on which clock time the second free-running clock indicated as the particular image was recorded.

13. Process according to one of the preceding claims, **characterised in that**
- the recording time information present in the first and second video signal indicates the particular recording times in time units which correspond to a multiple of the time between sequential video images;
- the recording time information present in the particular video signal for an image is corrected according to the time interval or the number of images between the occurrence of a change in the time unit display in the recording time information and the image, and
- such images of the first video signal and of the second video signal are treated as recorded simultaneously, the corrected recording times of which deviate from one another corresponding to the registered time lag between the first clock and the second clock.

14. Process according to claim 13, **characterised in that** the recording time information present in the first and second video signal indicates the particular recording times in hours, minutes and time units of seconds.

15. Process according to one of the preceding claims, **characterised in that**
- the first video signal is a signal from a first video camera and the second video signal is a signal from a second video camera; and
- the first clock is a real-time clock installed in the first camera and the second clock is a real-time clock installed in the second camera.

16. Process according to claim 15, **characterised in that** the received video signals are recorded video signals, which are reproduced by particular storage media of the first or second video camera.

17. Process according to one of the preceding claims, **characterised in that**
- the received video signals are digital video signals,
- the data of any one image of a received video signal are divided into data packages which are transferred one after another;
- the at least one package of any one image contains the recording time information for the particular image; and
- ongoing cycle time information is stored for each received package.

18. Process according to claim 17, **characterised in that** signals in the format of the digital video signal are received to register the time lag between the first clock and the second clock, wherein at least one package of any one image contains the clock time actually indicated by the particular clock.

19. Process according to claim 18, **characterised in that** the time lag between the first clock and the second clock is registered
- from the difference between the time marker of a first received package, which contains the clock time actually indicated by the first clock, and the ongoing time marker of a second received package, which contains the clock time actually indicated by the second clock, and
- from the difference between the clock times indicated in the first package and the second package.

20. Process according to one of the preceding claims, **characterised in that** the images are full-frames or half-frames.

21. Device for synchronising video signals having
- devices for receiving a first video signal representing a sequence of images which contains recording time information for at least one of the images of the first video signal, on which time a first free-running clock indicated as the image was recorded, and for receiving at least a second video signal representing a sequence of images which contains recording time information for at least one of the images of the second video signal, on which time a second free-running clock indicated as the image was recorded; **characterised by**
- devices for registering a time lag between the first clock and the second clock using the particular clock times actually indicated by the two free-running clocks, wherein the time lag indicates by how much the first clock is fast or slow with respect to the second clock; and
- synchronisation devices for treating images of the first video signal as recorded simultaneously with images of the second video signal, the recording times of which according to the recording time information in the first video signal and the second video signal deviate from one another corresponding to the time lag between the first clock and the second clock.

22. Device according to claim 21, **characterised in that** the device for registering the time lag between the first clock and the second clock comprises:
- a third free-running clock;
- devices for registering a time lag between the time indicated by the first clock and the time indicated by the third clock;
- devices for registering a time lag between the time indicated by the second clock and the time indicated by the third clock; and
- devices for calculating the time lag between the first clock and the second clock from the registered time lag between the first clock and the third clock and the registered time lag between the second and the third clock.

23. Device according to claim 21, **characterised in that** the device for registering the time lag between the first clock and the second clock comprises;
- a third clock;
- devices for producing synchronisation between the first clock and a third clock by setting the third clock according to the time indicated by the first clock; and
- devices for registering a time lag between the time indicated by the second clock and the time indicated by the third clock.

24. Device according to one of claims 21 to 23, **characterised by**
- devices for storing at least one of the received first and second video signals;
- wherein the synchronisation devices for treating images of the first video signal and of the second video signal as recorded simultaneously comprise:
- devices for producing a video signal composed synchronously of image and sound from an image and/or sound belonging to the first video signal and that image and/or sound of the second video signal, the recording time of which deviates from the recording time of the image and sound of the first video signal corresponding to the registered time lag between the first clock and the second clock.

25. Device according to one of claims 21 to 24, **characterised in that** the synchronisation devices comprise:
- devices for correcting the recording time information of at least one of the video signals according to the registered time lag between the first clock and the second clock.

26. Device according to one of claims 21 to 25, **characterised by**
- devices for repeated registering of the time lag between the first clock and the second clock;
- devices for registering the temporal interval between the repeated registrations of time lag; and
- devices for extrapolating the time lag over the time from the particular registered time lags and the temporal interval between their registration.

27. Device according to one of claims 21 to 26, **characterised in that** the devices for registering a time lag between the first clock and the second clock comprise:
- devices for registering the time between the occurrence of a change in the time unit display of the first clock and the occurrence of a change in the time unit display of the second clock;
- wherein the devices for registering the time lag between the first clock and the second clock are designed to calculate the time lag from the clock times indicated by the first clock and the second clock and the registered time between a change in the time unit display of the first clock and a change in the time unit display of the second clock.

28. Device according to claim 27, **characterised in that** the first clock and the second clock indicate their particular clock times in hours, minutes and time units of seconds.

29. Device according to one of claims 21 to 28, **characterised by**
- devices for registering the progress of the recording times indicated in the first and second video signal;
- devices for registering the time interval or the number of images between the particular image of the first or second video signal and the progress of the recording time; and
- devices for correcting the recording time information present in the particular video signal for the particular image according to the registered time interval or the registered number of images;
- wherein the synchronisation devices are designed to treat such images of the first video signal and of the second video signal as recorded simultaneously, the corrected recording times of which deviate from one another corresponding to the registered time lag between the first clock and the second clock.

30. Device according to one of claims 21 to 29, **characterised in that**
- the devices for registering a time lag between the first clock and the second clock are designed to calculate the time lag
- from the difference between a time marker of a first received data package, which contains the clock time actually indicated by the first clock, and the ongoing time marker of a second received package, which contains the clock time actually indicated by the second clock, and
- from the difference between the clock times indicated in the first package and the second package.

31. Device according to one of the preceding claims 21 to 30, **characterised in that**
- the devices for registering a time lag between the first clock and the second clock are components of a portable, independently operatable module; and
- an interface for the transfer of information from the module to the rest of the device is provided, via which the portable apparatus is coupled in separable manner to the rest of the device.

32. Device for registering a time lag between free-running video camera clocks, having ,
- an interface for connection to a first video camera and at least a second video camera;
- devices for reading-out the clock time actually indicated by a first clock in the first camera, and for reading-out the clock time actually indicated by a second clock in the second camera;
- devices for storing information relating to a time lag between the first clock and the second clock, which indicates by how much the first clock is fast or slow with respect to the second clock; and
- an interface in order to read out from the module the stored information relating to the time lag between the clocks.

33. Device for synchronising video signals having
- devices for receiving a first video signal representing a sequence of images which contains recording time information for at least one of the images of the first video signal, on which time a first free-running clock indicated as the image was recorded, and for receiving at least a second video signal representing a sequence of images which contains recording time information for at least one of the images of the second video signal, on which time a second free-running clock indicated as the image was recorded;
- interface devices for reading-out from a device according to claim 32 information relating to a time lag between the first clock and the second clock which indicates by how much the first clock is fast or slow with respect to the second clock; and
- synchronisation devices for treating images of the first video signal as recorded simultaneously with images of the second video signal, the recording times of which according to the recording time information in the first video signal and the second video signal deviate from one another corresponding to the time lag between the first clock and the second clock.

34. Computer program which may be loaded into the internal memory of a digital computer and comprises software code sections, with which the process steps according to one of the preceding claims 1 to 20 are executed when the software code sections are executed on a computer.

35. Computer-compatible medium on which a computer program is stored, which comprises computer-compatible software code sections, with which the process steps according to one of the preceding claims 1 to 20 are executed when the software code sections are executed on a computer.

## Revendications

1. Procédé de synchronisation des signaux vidéo, qui présente les étapes qui consistent à _{:}
- recevoir un premier signal qui présente une succession d'images et qui contient pour au moins une des images du premier signal vidéo des informations d'heure d'enregistrement qui indiquent l'heure qu'une première horloge en fonctionnement permanent affichait lorsque l'image a été enregistrée,
- recevoir au moins un deuxième signal vidéo qui représente une succession d'images et qui contient pour au moins l'une des images du deuxième signal vidéo qui indique l'heure qu'une deuxième horloge en fonctionnement permanent affichait lorsque l'image a été enregistrée,
**caractérisé par** les étapes qui consistent à:
- déterminer le décalage de temps entre la première horloge et la deuxième horloge à l'aide des heures effectivement affichées par les deux horloges en fonctionnement permanent, le décalage de temps indiquant de combien la première horloge est en avance ou en retard par rapport à la deuxième horloge et
- traiter les images du premier signal vidéo et du deuxième signal vidéo dont les heures d'enregistrement données par les informations d'heure d'enregistrement présentes dans le premier signal vidéo et dans le deuxième signal vidéo diffèrent l'une de l'autre d'une valeur qui correspond au décalage de temps déterminé entre la première horloge et la deuxième horloge comme si elles avaient été enregistrées simultanément.

2. Procédé selon la revendication 1, **caractérisé en ce que** le décalage de temps entre la première horloge et la deuxième horloge est déterminé par lecture simultanée de l'heure effectivement affichée par la première horloge et de l'heure effectivement affichée par la deuxième horloge.

3. Procédé selon la revendication 1, **caractérisé en ce que** le décalage de temps entre la première horloge et la deuxième horloge est déterminé par les étapes qui consistent à:
- déterminer le décalage de temps entre l'heure affichée par la première horloge en fonctionnement permanent et l'heure affichée par une troisième horloge en fonctionnement permanent,
- ensuite, déterminer le décalage de temps entre l'heure affichée par la deuxième horloge et l'heure affichée par la troisième horloge et
- calculer le décalage de temps entre la première horloge et la deuxième horloge à partir du décalage de temps déterminé entre la première horloge et la troisième horloge et du décalage de temps déterminé entre la deuxième horloge et la troisième horloge.

4. Procédé selon la revendication 1, **caractérisé en ce que** le décalage de temps entre la première et la deuxième horloge est déterminé par les étapes qui consistent à:
- régler la troisième horloge à une heure qui suit l'heure effectivement affichée par la première horloge et
- ensuite, déterminer le décalage de temps entre l'heure affichée par la deuxième horloge et l'heure affichée par la troisième horloge.

5. Procédé selon l'une des revendications précédentes, **caractérisé en ce que** le premier et le deuxième signal vidéo sont des signaux reproduits sur un ou plusieurs supports d'affichage sur lequel ou lesquels ils ont été préalablement affichés en même temps que les signaux audio correspondants.

6. Procédé selon l'une des revendications précédentes, **caractérisé par** les étapes qui consistent à:
- conserver en mémoire dans un ou plusieurs supports de mémoire au moins un, plusieurs ou tous les signaux vidéo reçus,
- l'étape de traitement des images du premier signal vidéo et du deuxième signal vidéo considérées comme ayant été enregistrées simultanément comprenant l'étape qui consiste à :
- créer un signal vidéo constitué d'une image et d'un son synchronisés à partir d'une image et/ou d'un son qui appartiennent au premier signal vidéo et de l'image et/ou du son du deuxième signal vidéo reçu dont l'heure d'enregistrement diffère de l'heure d'enregistrement de l'image et du son du premier signal vidéo d'une valeur qui correspond au décalage de temps déterminé entre la première horloge et la deuxième horloge.

7. Procédé selon l'une des revendications précédentes, **caractérisé en ce que** l'étape de traitement d'images du premier signal vidéo et du deuxième signal vidéo considérées comme ayant été enregistrées simultanément comprend l'étape qui consiste à:
- corriger les informations d'heure d'enregistrement d'au moins un des signaux vidéo en fonction du décalage de temps déterminé entre la première horloge et la deuxième horloge.

8. Procédé selon l'une des revendications précédentes, **caractérisé en ce que** l'étape de détermination du décalage de temps entre la première horloge et la deuxième horloge est réalisée avant et/ou pendant et/ou après la réception du premier signal vidéo et du deuxième signal vidéo.

9. Procédé selon l'une des revendications précédentes, **caractérisé en ce que**:
- l'étape de détermination du décalage de temps entre la première horloge et la deuxième horloge est réalisée une nouvelle fois à un écart temporel par rapport à la première détermination et **en ce que** :
- le décalage de temps est extrapolé dans le temps à partir des décalages dans le temps respectivement déterminés et de l'écart temporel entre leurs déterminations.

10. Procédé selon l'une des revendications précédentes, **caractérisé en ce que** lors de la détermination du décalage de temps entre la première horloge et la deuxième horloge :
- la première horloge et la deuxième horloge affichent leur heure en unités de temps qui correspondent à un multiple de la durée qui s'écoule entre des images vidéo successives,
- la durée qui s'écoule entre l'apparition d'un changement de l'affichage de l'unité de temps de la première horloge et l'apparition d'un changement de l'affichage de l'unité de temps de la deuxième horloge est déterminée et
- le décalage de temps entre la première horloge et la deuxième horloge est déterminé à partir des heures affichées par la première horloge et par la deuxième horloge et de la durée déterminée entre un changement de l'affichage de l'unité de temps de la première horloge et un changement de l'affichage de l'unité de temps de la deuxième horloge.

11. Procédé selon la revendication 10, **caractérisé en ce que** la première horloge et la deuxième horloge affichent leur heure en heures, minutes, et en unités de temps constituées de secondes.

12. Procédé selon l'une des revendications précédentes, **caractérisé en ce que** :
- pour chaque image individuelle, le premier signal vidéo contient des informations explicites sur l'heure d'enregistrement qui donnent l'heure qu'affichait la première horloge lorsque cette image a été enregistrée et
- le deuxième signal vidéo contient pour chaque image individuelle des informations explicites sur l'heure d'enregistrement qui donnent l'heure qu'affichait la deuxième horloge lorsque l'image concernée a été enregistrée.

13. Procédé selon l'une des revendications précédentes, **caractérisé en ce que** les informations d'heure d'enregistrement contenues dans le deuxième signal vidéo donnent les heures d'enregistrement concernées en unités de temps qui correspondent à un multiple de la durée qui s'écoule entre deux images vidéo successives,
- les informations d'heure d'enregistrement contenues dans le signal vidéo qui correspond à une image sont corrigées en fonction du laps de temps ou du nombre d'images qui se sont écoulées entre l'apparition d'un changement de l'affichage de l'unité de temps dans les informations d'heure d'enregistrement et d'un changement d'image et
- les images du premier signal vidéo et du deuxième signal vidéo dont les heures d'enregistrement corrigées l'une par rapport à l'autre diffèrent de la même valeur que le décalage de temps déterminé entre la première horloge et la deuxième horloge sont traitées comme si elles avaient été enregistrées simultanément.

14. Procédé selon la revendication 13, **caractérisé en ce que** les informations d'heure d'enregistrement contenues dans le premier et dans le deuxième signal vidéo affichent les heures respectives d'enregistrement en heures, minutes, et unités de temps constituées de secondes.

15. Procédé selon l'une des revendications précédentes, **caractérisé en ce que** :
- le premier signal vidéo est un signal qui provient d'une première caméra vidéo et le deuxième signal vidéo un signal qui provient d'une deuxième caméra vidéo et
- la première horloge est l'horloge en temps réel incorporée dans la première caméra et la deuxième horloge une horloge en temps réel incorporée dans la deuxième caméra.

16. Procédé selon la revendication 15, **caractérisé en ce que** les signaux vidéo reçus sont des signaux vidéo affichés qui sont reproduits en provenance des supports d'enregistrement respectifs de la première et de la deuxième caméra vidéo.

17. Procédé selon l'une des revendications précédentes, **caractérisé en ce que** :
- les signaux vidéo reçus sont des signaux vidéo numériques,
- les données de chaque image d'un signal vidéo reçu sont divisées en paquets de données qui sont transmis successivement,
- le ou les paquets de chaque image contient les informations d'heure d'enregistrement de l'image concernée et
- une information de durée de cycle est conservée en permanence pour chaque paquet reçu.

18. Procédé selon la revendication 17, **caractérisé en ce que** pour déterminer le décalage de temps entre la première horloge et la deuxième horloge, des signaux sont reçus au format des signaux vidéo numériques, lequel format contient pour chaque image au moins un paquet qui contient l'heure effectivement affichée par l'horloge correspondante.

19. Procédé selon la revendication 18, **caractérisé en ce que** le décalage de temps entre la première horloge et la deuxième horloge est déterminé :
- à partir de la différence entre le repérage du temps d'un premier paquet reçu, qui contient l'heure effectivement affichée par la première horloge, et le repérage continu dans le temps d'un deuxième paquet reçu, qui contient l'heure effectivement affichée par la deuxième horloge et
- à partir de la différence entre les heures affichées dans le premier paquet et dans le deuxième paquet.

20. Procédé selon l'une des revendications précédentes, **caractérisé en ce que** les images sont des images pleines ou des demi-images.

21. Dispositif de synchronisation de signaux vidéo, qui présente :
- des dispositifs de réception d'un premier signal vidéo qui représente une succession d'images et qui contient pour au moins une des images du premier signal vidéo des informations d'heure d'enregistrement qui indiquent l'heure qu'affichait une première horloge au moment où l'image a été enregistrée ainsi que des dispositifs de réception d'au moins un deuxième signal vidéo qui représente une succession d'images et qui contient pour au moins une des images du deuxième signal vidéo des informations d'heure d'enregistrement qui indiquent l'heure qu'affichait une deuxième horloge au moment où l'image a été enregistrée,
**caractérisé par**:
- des dispositifs de détermination du décalage de temps entre la première horloge et la deuxième horloge à l'aide des heures effectivement affichées par les deux horloges, le décalage de temps indiquant de combien la première horloge est en avance ou en retard par rapport à la deuxième horloge et
- des dispositifs de synchronisation qui traitent les images du premier signal vidéo dont l'heure d'enregistrement indiquée dans les informations d'heure d'enregistrement du premier signal vidéo et du deuxième signal vidéo diffèrent l'une de l'autre du décalage de temps entre la première horloge et la deuxième horloge comme ayant été enregistrées en même temps que des images du deuxième signal vidéo.

22. Dispositif selon la revendication 21, **caractérisé en ce que** le dispositif de détermination du décalage de temps entre la première horloge et la deuxième horloge comprend :
- une troisième horloge en fonctionnement permanent,
- des dispositifs de détermination du décalage de temps entre l'heure affichée par la première horloge et l'heure affichée par la troisième horloge,
- des dispositifs de détermination du décalage de temps entre l'heure affichée par la deuxième horloge et l'heure affichée par la troisième horloge et
- des dispositifs de calcul du décalage de temps entre la première horloge et la deuxième horloge à partir du décalage de temps déterminé entre la première horloge et la troisième horloge et du décalage de temps déterminé entre la deuxième horloge et la troisième horloge.

23. Dispositif selon la revendication 21, **caractérisé en ce que** le dispositif de détermination du décalage de temps entre la première horloge et la deuxième horloge comprend :
- une troisième horloge,
- des dispositifs qui permettent d'accorder la première horloge et une troisième horloge en réglant la troisième horloge sur l'heure affichée par la première horloge,
- des dispositifs de détermination du décalage de temps entre l'heure affichée par la deuxième horloge et l'heure affichée par la troisième horloge.

24. Dispositif selon l'une des revendications 21 à 23, **caractérisé par**:
- des dispositifs de mise en mémoire d'au moins un des premiers et deuxièmes signaux vidéo reçus,
- des dispositifs de synchronisation qui traitent les images du premier signal vidéo et du deuxième signal vidéo comme ayant enregistrées simultanément et qui comprend:
- des dispositifs qui créent un signal vidéo constitué de l'assemblage synchronisé d'une image et d'un son à partir de l'image et/ou du son qui appartiennent au premier signal vidéo et de l'image et/ou du son du deuxième signal vidéo dont l'heure d'enregistrement diffère de l'heure d'enregistrement de l'image et du son du premier signal vidéo d'une manière qui correspond au décalage de temps déterminé entre la première horloge et la deuxième horloge.

25. Dispositif selon l'une des revendications 21 à 24, **caractérisé en ce que** les dispositifs de synchronisation comprennent :
- les dispositifs qui corrigent les informations d'heure d'enregistrement d'au moins un des signaux vidéo en fonction du décalage de temps déterminé entre la première horloge et la deuxième horloge.

26. Dispositif selon l'une des revendications 21 à 25, **caractérisé par** :
- des dispositifs qui déterminent, à répétition le décalage de temps entre la première horloge et la deuxième horloge,
- des dispositifs qui déterminent l'écart temporel entre les déterminations répétées du décalage de temps et
- des dispositifs qui extrapolent dans le temps le décalage de temps à partir des décalages d'heure respectivement déterminés et de l'écart temporel entre leurs déterminations.

27. Dispositif selon l'une des revendications 21 à 26, **caractérisé en ce que** les dispositifs de détection du décalage de temps entre la première horloge et la deuxième horloge comprennent:
- des dispositifs qui détectent le temps qui s'écoule entre l'apparition d'un changement de l'affichage de l'unité de temps de la première horloge et de l'apparition d'un changement de l'affichage de l'unité de temps de la deuxième horloge,
- le dispositif de détermination du décalage d'heure entre la première horloge et la deuxième horloge étant configuré pour calculer le décalage de temps à partir des heures affichées par la première horloge et par la deuxième horloge et de la durée que l'on a déterminée comme s'étant écoulée entre un changement de l'affichage de l'unité de temps de la première horloge et un changement de l'affichage de l'unité de temps de la deuxième horloge.

28. Dispositif selon la revendication 27, **caractérisé en ce que** la première horloge et la deuxième horloge affichent chacune leur heure en heures, minutes et unités de temps constituées de secondes.

29. Dispositif selon l'une des revendications 21 à 28, **caractérisé par** :
- des dispositifs de détection de l'avancement des heures d'enregistrement affichées dans le premier et dans le deuxième signal vidéo,
- des dispositifs qui déterminent le laps de temps ou le nombre d'images qui se sont écoulés entre une image du premier ou du deuxième signal vidéo et l'avancement de l'heure d'enregistrement et
- des dispositifs qui corrigent les informations d'heure d'enregistrement contenues dans chaque image de chaque signal vidéo en fonction du laps de temps ou du nombre d'images qui ont été déterminés,
- les dispositifs de synchronisation étant configurés pour traiter les images du premier signal vidéo et du deuxième signal vidéo dont les heures d'enregistrement corrigées diffèrent l'une de l'autre d'une manière qui correspond au décalage de temps qui a été déterminé entre la première horloge et la deuxième horloge comme ayant été enregistrées simultanément.

30. Dispositif selon l'une des revendications 21 à 29, **caractérisé en ce que** :
- les dispositifs qui détectent le décalage de temps entre la première horloge et la deuxième horloge sont configurés pour calculer le décalage de temps :
- à partir de la différence entre le repérage dans le temps d'un premier paquet de données reçu qui contient l'heure effectivement affichée par la première horloge et le repérage permanent dans le temps d'un deuxième paquet reçu qui contient l'heure effectivement affichée par la deuxième horloge, et
- à partir de la différence entre l'heure affichée dans le premier paquet et l'heure affichée dans le deuxième paquet.

31. Dispositif selon l'une des revendications 21 à 30 qui précèdent, **caractérisé en ce que** :
- les dispositifs qui déterminent le décalage de temps entre la première horloge et la deuxième horloge font partie d'un module transportable qui fonctionne indépendamment et
- une interface est prévue pour transmettre du module au reste du dispositif des informations qui permettent d'accoupler de manière séparable l'appareil portable au reste du dispositif.

32. Dispositif de détermination du décalage de temps entre des horloges qui fonctionnent en permanence dans des caméras vidéo, lequel dispositif présente :
- une interface de liaison avec une première caméra vidéo et au moins une deuxième caméra vidéo,
- des dispositifs de lecture de l'heure effectivement affichée par la première horloge de la première caméra et de lecture de l'heure effectivement affichée par une deuxième horloge située dans la deuxième caméra,
- des dispositifs qui conservent en mémoire les informations sur le décalage de temps entre la première horloge et la deuxième horloge et qui indiquent de combien la première horloge est en avance ou en retard par rapport à la deuxième horloge et
- une interface qui permet de lire dans les modules les informations conservées en mémoire sur le décalage de temps entre les horloges.

33. Dispositif de synchronisation de signaux vidéo, qui présente :
- des dispositifs de réception d'un premier signal vidéo qui représente une succession d'images et qui contient pour au moins une des images du premier signal vidéo les informations d'heure d'enregistrement qui indiquent l'heure qu'affichait une première horloge à fonctionnement permanent lorsque l'image a été enregistrée, ainsi que de réception d'au moins un deuxième signal vidéo qui représente une succession d'images et qui, pour au moins une des images du deuxième signal vidéo, contient des informations d'heure d'enregistrement qui indiquent quelle heure une deuxième horloge à fonctionnement permanent affichait au moment où l'image a été enregistrée,
- des dispositifs d'interfaçage qui lisent dans un dispositif selon la revendication 32 des informations sur le décalage de temps entre la première horloge et la deuxième horloge et qui indiquent de combien la première horloge est en avance ou en retard par rapport à la deuxième horloge et
- des dispositifs de synchronisation qui traitent les images du premier signal vidéo dont, selon les informations d'heure d'enregistrement du premier signal vidéo et du deuxième signal vidéo, les heures d'enregistrement diffèrent l'une de l'autre d'une manière qui correspond au décalage de temps entre la première horloge et la deuxième horloge, comme ayant été enregistrée en même temps que les images du deuxième signal vidéo.

34. Programme informatique qui peut être chargé dans la mémoire interne d'un ordinateur numérique et qui contient des parties de code de logiciel par lesquelles les étapes de traitement selon l'une des revendications 1 à 20 qui précèdent peuvent être réalisées lorsque les parties de code de logiciel sont exécutées sur un ordinateur.

35. Support approprié à un ordinateur, sur lequel est conservé en mémoire un programme informatique qui contient des parties de code logiciel appropriées à l'ordinateur et par lesquelles les étapes de traitement selon l'une des revendications 1 à 20 qui précèdent peuvent être exécutées lorsque les parties de code de logiciel sont exécutées sur un ordinateur.
